# EUROPÄISCHE PATENTSCHRIFT

(11) **EP 3 887 674 B1**
(45) Veröffentlichungstag und Bekanntmachung des Hinweises auf die Patenterteilung: **15.10.2025**
(21) Anmeldenummer: 19809452.6
(22) Anmeldetag: 25.11.2019
(51) Int. Cl.: F03D 7/02

(54) **VERFAHREN UND SYSTEM ZUM BETREIBEN EINER WINDENERGIEANLAGE**
METHOD AND SYSTEM FOR OPERATING A WIND TURBINE
PROCÉDÉ ET SYSTÈME PERMETTANT DE FAIRE FONCTIONNER UNE ÉOLIENNE

(30) Priorität: 26.11.2018 DE 102018009232; 26.11.2018 DE 102018009231; 26.11.2018 DE 102018009230
(43) Veröffentlichungstag der Anmeldung: 06.10.2021
(73) Patentinhaber: Siemens Gamesa Renewable Energy Service GmbH, 20097 Hamburg (DE)
(72) Erfinder: WARFEN, Karsten, 23795 Weede/Söhren (DE); GOSCH-PLESS, Timo, 24783 Osterrönfeld (DE)
(74) Vertreter: Schlotter, Alexander Carolus Paul
(86) Internationale Anmeldenummer: PCT/EP2019/082399
(87) Internationale Veröffentlichungsnummer: WO 2020/109219

(56) Entgegenhaltungen:
- EP-A1- 3 343 027
- US-A1- 2004 081 551

## Beschreibung

Die vorliegende Erfindung betrifft ein Verfahren und System zum Betreiben einer Windenergieanlage sowie ein Computerprogrammprodukt zur Durchführung des Verfahrens. Bei Windenergieanlagen, die einen um eine horizontale Rotorachse drehbaren Rotor mit Rotorblättern aufweisen, ist es an sich bekannt, mithilfe eines Nachführantriebes den Rotor um eine vertikale Gierachse zu verdrehen, um eine Abweichung zwischen seiner Rotorachse und einer variierenden Windrichtung zu reduzieren ("Windnachführen").

Insbesondere mit zunehmenden Rotordurchmessern steigen die Belastungen solcher Nachführantriebe.

Ferner wird auf die EP 3 343 027 A1 und die US 2004/081551 A1 verwiesen.

Aufgabe der vorliegenden Erfindung ist es, den Betrieb einer Windenergieanlage zu verbessern.

Diese Aufgabe wird durch ein Verfahren mit den Merkmalen des Anspruchs 1 gelöst.

Ansprüche 8 und 22 stellen ein System bzw. ein Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung weist eine Windenergieanlage einen Rotor auf, der, in einer Ausführung an, insbesondere in, einer Gondel, um eine Rotorachse drehbar (gelagert) ist.

In einer Ausführung ist der Rotor mit einem Generator zur Umsetzung von Wind- in elektrische Energie gekoppelt bzw. weist einen Generator auf, in einer Ausführung ist die Windenergieanlage zur Einspeisung von elektrischer Energie in ein Stromnetz vorgesehen, insbesondere eingerichtet, bzw. wird hierzu verwendet.

Gemäß der vorliegenden Erfindung weist der Rotor wenigstens zwei, insbesondere wenigstes drei, Rotorblätter auf, die bzw. deren Blattwinkel, insbesondere mithilfe einer, in einer Ausführung motorischen, insbesondere elektromotorischen, und/oder hydraulischen, Blattverstelleinrichtung, individuell bzw. separat um ihre (jeweilige) Blattachse verstell- bzw. -drehbar sind bzw. verstellt bzw. -dreht werden, in einer Ausführung (auch) während des Betriebs bzw. bei um seine Rotorachse rotierendem Rotor.

Nach einer Ausführung der vorliegenden Erfindung weist die Windenergieanlage einen Nachführantrieb auf, der in einem Nachführbetriebsmodus den Rotor bzw. dessen Rotorachse, insbesondere die Gondel gegenüber einem Turm, auf dem diese drehbar angeordnet ist, um eine Gierachse derart bzw. mit der Maßgabe verstellt, dass eine Abweichung zwischen der Rotorachse und einer, in einer Ausführung erfassten oder prognostizierten, insbesondere aktuellen, Windrichtung, insbesondere in einer Horizontalebene, reduziert wird ("Windnachführen des Rotors") bzw. hierzu vorgesehen, insbesondere eingerichtet ist bzw. verwendet wird.

Hierdurch kann in einer Ausführung eine Umsetzung von Windenergie in mechanische bzw. elektrische Leistung durch die Windenergieanlage verbessert werden.

Die Gierachse schließt in einer Ausführung mit einer Gravitationsrichtung einen Winkel ein, der höchstens 30°, insbesondere höchstens 15°, beträgt. In einer Ausführung ist die Gierachse, wenigstens im Wesentlichen, vertikal (ausgerichtet).

Zusätzlich oder alternativ schließt die Rotorachse in einer Ausführung mit einer bzw. der Gravitationsrichtung einen Winkel ein, der wenigstens 60°, insbesondere wenigstens 75°, und/oder höchstens 120°, insbesondere höchstens 105° beträgt. In einer Ausführung ist die Rotorachse, wenigstens im Wesentlichen, horizontal (ausgerichtet), in einer Weiterbildung (leicht) gegen die Horizontale geneigt, vorzugsweise um wenigstens 2° und/oder höchstens 10°.

Zusätzlich oder alternativ schließt die Rotorachse in einer Ausführung mit der Gierachse einen Winkel ein, der wenigstens 60°, insbesondere wenigstens 75°, und/oder höchstens 120°, insbesondere höchstens 105° beträgt. In einer Ausführung stehen Rotor- und Gierachse, wenigstens im Wesentlichen, senkrecht aufeinander.

Hierdurch kann in einer Ausführung eine Umsetzung von Windenergie in mechanische bzw. elektrische Leistung durch die Windenergieanlage (weiter) verbessert werden.

In einer Ausführung weist der Nachführantrieb einen oder mehrere Elektro- und/oder Hydraulikmotor(en) zum elektromotorischen bzw. hydraulischen Windnachführen des Rotors bzw. der Gondel um die Gierachse bzw. gegenüber dem Turm auf, in einer Ausführung mithilfe eines ein- oder mehrstufigen Getriebes. In einer Ausführung weist die Windenergieanlage wenigstens eine, insbesondere mechanische, elektrische und/oder hydraulische, Feststellbremse zum Fixieren einer (Winkel)Stellung des Rotors bzw. der Gondel um die Gierachse bzw. gegenüber dem Turm auf.

Gemäß der vorliegenden Erfindung werden in dem Nachführbetriebsmodus die Blattwinkel der Rotorblätter um ihre (jeweilige) Blattachse derart bzw. mit der Maßgabe verstellt, dass (hierdurch) eine Windnachführbewegung durch den Nachführantrieb unterstützt wird.

In einer Ausführung werden die Blattwinkel zyklisch bzw. periodisch mit der Drehzahl des Rotors um seine Rotorachse ("Rotordrehzahl") verstellt, wobei in einer Ausführung die individuellen (Amplituden dieser) Blattwinkelverstellung(en) der einzelnen Rotorblätter gegeneinander um die Rotorachse phasenverschoben sind, in einer Ausführung um einen konstanten Winkel, der in einer Ausführung gleich 360° dividiert durch die Anzahl der Rotorblätter ist.

Dem liegt die Idee zugrunde, dass durch eine solche Blattwinkelverstellung aerodynamisch ein Drehmoment um die Gierachse induziert werden kann, welches vorteilhaft zur Unterstützung der Windnachführbewegung durch den Nachführantrieb genutzt werden kann. Auf diese Weise können in einer Ausführung Lasten des Nachführantriebs reduziert, insbesondere also mit gleichbleibenden Nachführantrieben größere Windenergieanlagen bzw. gleichbleibende Windenergieanlagen mit kleineren Nachführantrieb(slast)en betrieben werden.

Gemäß Anspruch 16 werden zum bzw. beim Betreiben der Windenergieanlage in dem Nachführbetriebsmodus die Blattwinkel der Rotorblätter um ihre (jeweilige) Blattachse zur Unterstützung einer Windnachführbewegung durch den Nachführantrieb verstellt, wobei eine Amplitude dieser Blattwinkelverstellung, insbesondere gegenüber einem Referenzwert, um oder auf einen vorgegebenen (ersten Reduzier-)Wert reduziert wird, falls eine Giergeschwindigkeit des Rotors, insbesondere seiner Rotorachse, um die Gierachse, insbesondere betragsmäßig oder vorzeichenbehaftet, in einem vorgegebenen, in einer Ausführung einstellbaren, (ersten) Reduzier-Geschwindigkeitsbereich liegt, der eine (erste) untere Reduzier-Geschwindigkeitsgrenze aufweist, insbesondere durch diese (nach unten) begrenzt ist.

Zusätzlich oder alternativ werden gemäß Anspruch 16 zum bzw. beim Betreiben der Windenergieanlage in dem Nachführbetriebsmodus die Blattwinkel der Rotorblätter um ihre (jeweilige) Blattachse zur Unterstützung einer Windnachführbewegung durch den Nachführantrieb verstellt, wobei eine Amplitude dieser Blattwinkelverstellung, insbesondere gegenüber einem bzw. dem Referenzwert, um oder auf einen vorgegebenen (ersten Erhöhungs-)Wert erhöht wird, falls eine Giergeschwindigkeit des Rotors um die Gierachse, insbesondere betragsmäßig oder vorzeichenbehaftet, in einem vorgegebenen, in einer Ausführung einstellbaren, (ersten) Erhöhungs-Geschwindigkeitsbereich liegt, der eine (erste) obere Erhöhungs-Geschwindigkeitsgrenze aufweist, insbesondere durch diese (nach oben) begrenzt ist.

In einer Ausführung weist die Amplitude der Blattwinkelverstellung zur Unterstützung einer Windnachführbewegung durch den Nachführantrieb den, in einer Ausführung ermittelten, insbesondere konstanten, insbesondere einstellbaren, oder variablen, Referenzwert auf, falls die Giergeschwindigkeit unterhalb des (ersten) Reduzier-Geschwindigkeitsbereichs bzw. der (ersten) unteren Reduzier-Geschwindigkeitsgrenze und/oder oberhalb des (ersten) Erhöhungs-Geschwindigkeitsbereichs bzw. der (ersten) oberen Erhöhungs-Geschwindigkeitsgrenze, insbesondere innerhalb eines Normal-Geschwindigkeitsbereichs, liegt, sowie den demgegenüber reduzierten (ersten Reduzier-)Wert, falls die Giergeschwindigkeit innerhalb des (ersten) Reduzier-Geschwindigkeitsbereichs liegt und/oder den demgegenüber erhöhten (ersten Erhöhungs-)Wert, falls die Giergeschwindigkeit innerhalb des (ersten) Erhöhungs-Geschwindigkeitsbereichs liegt.

Dem liegt insbesondere die Idee zugrunde, dass durch eine solche stufenförmige Reduzierung bzw. Erhöhung in einer Ausführung ein stabile(re)s Betriebsverhalten bei gleichzeitig vorteilhafter Umsetzung von Windenergie in mechanische bzw. elektrische Leistung durch die Windenergieanlage realisiert werden kann.

In einer Ausführung wird die Amplitude der Blattwinkelverstellung zur Unterstützung einer Windnachführbewegung durch den Nachführantrieb stufenförmig um bzw. auf den (ersten) Reduzier-Wert reduziert bzw. heruntergestuft, wenn die Giergeschwindigkeit, insbesondere betragsmäßig oder vorzeichenbehaftet, die (erste) untere Reduzier-Geschwindigkeitsgrenze überschreitet. Zusätzlich oder alternativ wird die Amplitude der Blattwinkelverstellung zur Unterstützung einer Windnachführbewegung durch den Nachführantrieb in einer Ausführung stufenförmig um bzw. auf den (ersten) Erhöhungs-Wert erhöht bzw. hochgestuft, wenn die Giergeschwindigkeit, insbesondere betragsmäßig oder vorzeichenbehaftet, die (erste) obere Erhöhungs-Geschwindigkeitsgrenze unterschreitet.

Dem liegt insbesondere die Idee zugrunde, bei einer (zu) hohen Giergeschwindigkeit die Unterstützung einer durch den Nachführantrieb induzierten Windnachführbewegung durch die Blattwinkelverstellung zu reduzieren bzw. bei einer (zu) niedrigen Giergeschwindigkeit die Unterstützung einer durch den Nachführantrieb induzierten Windnachführbewegung durch die Blattwinkelverstellung zu erhöhen.

In einer Ausführung ist bzw. sind im Nachführbetriebsmodus kein oder wenigstens ein Reduzier-Geschwindigkeitsbereich, insbesondere wenigstens zwei Reduzier-Geschwindigkeitsbereiche, und/oder höchstens vier Reduzier-Geschwindigkeitsbereiche, in einer bevorzugten Ausführung genau ein Reduzier-Geschwindigkeitsbereich oder genau zwei Reduzier-Geschwindigkeitsbereiche, vorgesehen, für die die Amplitude der Blattwinkelverstellung (jeweils) geschwindigkeitsbereichspezifisch bzw. um bzw. auf den entsprechenden (geschwindigkeitsbereichspezifischen Reduzier-)Wert reduziert wird.

Zusätzlich oder alternativ ist bzw. sind in einer Ausführung im Nachführbetriebsmodus kein oder wenigstens ein Erhöhungs-Geschwindigkeitsbereich, insbesondere wenigstens zwei Erhöhungs-Geschwindigkeitsbereiche, und/oder höchstens vier Erhöhungs-Geschwindigkeitsbereiche, in einer bevorzugten Ausführung genau ein Erhöhungs-Geschwindigkeitsbereich oder genau zwei Erhöhungs-Geschwindigkeitsbereiche, vorgesehen, für die die Amplitude der Blattwinkelverstellung (jeweils) geschwindigkeitsbereichspezifisch bzw. um bzw. auf den entsprechenden (geschwindigkeitsbereichspezifischen Erhöhungs-)Wert erhöht wird.

Dem liegt insbesondere die Idee zugrunde, dass durch eine solche stark begrenzte Geschwindigkeitsbereichs- bzw. Stufen(an)zahl in einer Ausführung ein besonders stabiles Betriebsverhalten bei gleichzeitig vorteilhafter Umsetzung von Windenergie in mechanische bzw. elektrische Leistung durch die Windenergieanlage realisiert werden kann. Zusätzlich oder alternativ können hierdurch in einer Ausführung eine Sensorik und/oder Betriebsführung robust(er) ausgestaltet und/oder bereits vorhandene Windenergieanlagen vorteilhaft, vorzugsweise ohne oder mit geringe(re)n Hardware-Änderungen nachgerüstet und/oder Auswirkungen im Fehlerfall begrenzt und/oder leicht(er) beherrscht werden.

Entsprechend werden in einer Ausführung in dem Nachführbetriebsmodus die Blattwinkel verstellt, wobei die Amplitude der Blattwinkelverstellung zur Unterstützung einer Windnachführbewegung durch den Nachführantrieb um oder auf einen vorgegebenen (zweiten Reduzier-)Wert reduziert wird, falls die Giergeschwindigkeit, insbesondere betragsmäßig oder vorzeichenbehaftet, in einem vorgegebenen, in einer Ausführung einstellbaren, zweiten Reduzier-Geschwindigkeitsbereich liegt, der eine zweite untere Reduzier-Geschwindigkeitsgrenze aufweist, insbesondere durch diese (nach unten) begrenzt ist, und/oder um oder auf einen vorgegebenen (zweiten Erhöhungs-)Wert erhöht wird, falls die Giergeschwindigkeit, insbesondere betragsmäßig oder vorzeichenbehaftet, in einem vorgegebenen, in einer Ausführung einstellbaren, zweiten Erhöhungs-Geschwindigkeitsbereich liegt, der eine zweite obere Erhöhungs-Geschwindigkeitsgrenze aufweist, insbesondere durch diese (nach unten) begrenzt ist.

Der erste bzw. zweite Reduzier-Geschwindigkeitsbereich kann in einer Ausführung einseitig bzw. nach oben offen sein oder eine (erste bzw. zweite) obere Reduzier-Geschwindigkeitsgrenze aufweisen bzw. durch diese (nach oben) begrenzt sein. Zusätzlich oder alternativ kann in einer Ausführung der erste bzw. zweite Erhöhungs-Geschwindigkeitsbereich einseitig bzw. nach unten offen sein oder eine (erste bzw. zweite) untere Erhöhungs-Geschwindigkeitsgrenze aufweisen bzw. durch diese (nach unten) begrenzt sein. In einer Ausführung ist die zweite untere Reduzier-Geschwindigkeitsgrenze gleich der ersten oberen Reduzier-Geschwindigkeitsgrenze und/oder die zweite obere Erhöhungs-Geschwindigkeitsgrenze gleich der ersten unteren Erhöhungs-Geschwindigkeitsgrenze. In einer Ausführung kann die erste oder zweite obere Reduzier-Geschwindigkeitsgrenze gleich einer maximal möglichen oder zulässigen Giergeschwindigkeit des Rotors um die Gierachse oder auch (theoretisch bzw. mathematisch) unendlich bzw. wie bereits erwähnt der erste bzw. zweite Reduzier-Geschwindigkeitsbereich nach oben offen sein. Zusätzlich oder alternativ kann in einer Ausführung die erste oder zweite untere Erhöhungs-Geschwindigkeitsgrenze gleich Null oder negativ sein. Dadurch werden in einer Ausführung vorteilhaft auch (seltene) Fälle abgedeckt, bei denen der Rotor, zum Beispiel durch unerwartete Turbulenzen oder dergleichen, in eine der gewünschten Nachführbewegung entgegengesetzten Richtung gedrückt wird. Zusätzlich oder alternativ ist in einer Ausführung die (erste) obere Erhöhungs-Geschwindigkeitsgrenze kleiner als die (erste) untere Reduzier-Geschwindigkeitsgrenze, insbesondere können/kann die (erste) untere Reduzier-Geschwindigkeitsgrenze und/oder die (erste) obere Erhöhungs-Geschwindigkeitsgrenze einen Normal-Geschwindigkeitsbereich begrenzen, in dem ein Referenzwert der Amplitude der Blattwinkelverstellung zur Unterstützung einer Windnachführbewegung durch den Nachführantrieb weder reduziert noch erhöht wird.

In einer Ausführung wird die Amplitude der Blattwinkelverstellung bei Überschreiten der ersten unteren Reduzier-Geschwindigkeitsgrenze um den ersten Reduzier-Wert reduziert und bei Überschreiten der (höheren) zweiten unteren Reduzier-Geschwindigkeitsgrenze nochmals um denselben oder einen hiervon verschiedenen Reduzier-Wert reduziert. In einer Ausführung wird die Amplitude der Blattwinkelverstellung bei Überschreiten der ersten unteren Reduzier-Geschwindigkeitsgrenze auf den ersten Reduzier-Wert reduziert und bei Überschreiten der (höheren) zweiten unteren Reduzier-Geschwindigkeitsgrenze auf den zweiten Reduzier-Wert reduziert, der kleiner als der erste Reduzier-Wert ist.

In einer Ausführung wird die Amplitude der Blattwinkelverstellung bei Unterschreiten der ersten oberen Erhöhungs-Geschwindigkeitsgrenze um den ersten Erhöhungs-Wert reduziert und bei Unterschreiten der (niedrigeren) zweiten oberen Erhöhungs-Geschwindigkeitsgrenze nochmals um denselben oder einen hiervon verschiedenen Erhöhungs-Wert reduziert. In einer Ausführung wird die Amplitude der Blattwinkelverstellung bei Unterschreiten der ersten unteren Erhöhungs-Geschwindigkeitsgrenze auf den ersten Erhöhungs-Wert reduziert und bei Unterschreiten der (niedrigeren) zweiten unteren Erhöhungs-Geschwindigkeitsgrenze auf den zweiten Erhöhungs-Wert reduziert, der kleiner als der erste Erhöhungs-Wert ist.

In einer Ausführung erstreckt sich der erste und/oder zweite Reduzier- und/oder Erhöhungs-Geschwindigkeitsbereich und/oder der Normal-Geschwindigkeitsbereich (jeweils) über wenigstens 0,05° pro Sekunde [°/s], insbesondere wenigstens 0,1° pro Sekunde, in einer Ausführung wenigstens 0,2° pro Sekunde.

Dadurch kann in einer Ausführung jeweils, insbesondere in Kombination von zwei oder mehr der vorstehend genannten Ausführungen, ein besonders stabiles Betriebsverhalten bei gleichzeitig vorteilhafter Umsetzung von Windenergie in mechanische bzw. elektrische Leistung durch die Windenergieanlage realisiert werden.

In einer Ausführung weist das Verfahren die, in einer Ausführung chronologischen bzw. aufeinanderfolgenden, Schritte:
- Ermitteln eines Windnachführbedarfs, in einer Ausführung mittels Ermitteln, insbesondere messtechnisches Erfassen, einer Abweichung zwischen einer, insbesondere aktuellen oder gemittelten, Windrichtung und der Rotorachsrichtung, insbesondere deren horizontaler Komponente;
- Ermitteln der Amplitude der Blattwinkelverstellung zur Unterstützung der Windnachführbewegung durch den Nachführantrieb, insbesondere des Referenzwertes, in einer Ausführung auf Basis einer insbesondere empirisch und/oder mithilfe einer Simulation, vorgegebenen, insbesondere abgespeicherten und/oder einstellbaren, Abbildung von Windnachführbedarfswerten auf einen oder mehrere Blattwinkelverstellungsamplitudenwerte, insbesondere mithilfe eines Kennfeldes oder dergleichen;
- Einstellen der individuellen Blattwinkel der Rotorblätter auf Basis dieser ermittelten Amplitude
- Ermitteln, insbesondere messtechnisches Erfassen oder Prognostizieren, eines Ist-Wertes der Giergeschwindigkeit des Rotors um die Gierachse;

wenigstens einen der Schritte:
   - stufenförmiges Reduzieren der ermittelten Amplitude, falls der Ist-Wert eine oder mehrere vorgegebene, insbesondere einstellbare (untere Reduzier-)Geschwindigkeitsgrenzen überschreitet; und/oder
   - stufenförmiges Erhöhen der ermittelten Amplitude, falls der Ist-Wert eine oder mehrere vorgegebene, insbesondere einstellbare (obere Erhöhungs-)Geschwindigkeitsgrenzen unterschreitet;
sowie den Schritt:
   - (gegebenenfalls) Ein- bzw. Verstellen der individuellen Blattwinkel der Rotorblätter auf Basis dieser ermittelten und um eine oder mehrere Stufen reduzierten bzw. erhöhten Amplitude
auf. Gemäss Anspruch 21 ist ein System zum Betreiben der Windenergieanlage, insbesondere hard- und/oder software-, insbesondere programmtechnisch, zur Durchführung eines hier beschriebenen Verfahrens eingerichtet und/oder weist auf:
   - Mittel zum Verstellen von Blattwinkeln der Rotorblätter um ihre Blattachse zur Unterstützung einer Windnachführbewegung durch den Nachführantrieb in einem Nachführbetriebsmodus
sowie wenigstens eines von:
   - Mittel zum Reduzieren einer Amplitude dieser Blattwinkelverstellung um oder auf einen vorgegebenen Wert, falls eine Giergeschwindigkeit des Rotors um die Gierachse in einem vorgegebenen Reduzier-Geschwindigkeitsbereich liegt, der eine untere Reduzier-Geschwindigkeitsgrenze aufweist; und/oder
   - Mittel zum Erhöhen einer Amplitude dieser Blattwinkelverstellung um oder auf einen vorgegebenen Wert, falls eine Giergeschwindigkeit des Rotors um die Gierachse in einem vorgegebenen Erhöhungs-Geschwindigkeitsbereich liegt, der eine obere Erhöhungs-Geschwindigkeitsgrenze aufweist.

Gemäß Anspruch 9 werden zum bzw. beim Betreiben der Windenergieanlage in dem Nachführbetriebsmodus die Blattwinkel der Rotorblätter um ihre (jeweilige) Blattachse zur Unterstützung einer Windnachführbewegung durch den Nachführantrieb verstellt, wobei eine Amplitude dieser Blattwinkelverstellung in Abhängigkeit von einem Rotordrehmoment um die Rotorachse verstellt wird.

In einer Ausführung wird die Amplitude, insbesondere betragsmäßig oder vorzeichenbehaftet, von einem ersten auf einen zweiten Wert erhöht, wenn das Rotordrehmoment statt eines ersten einen, insbesondere betragsmäßig oder vorzeichenbehaftet, größeren zweiten Wert aufweist bzw. von einem zweiten auf einen ersten Wert reduziert, wenn das Rotordrehmoment statt eines zweiten einen, insbesondere betragsmäßig oder vorzeichenbehaftet, kleineren ersten Wert aufweist.

Dem liegt insbesondere die Idee zugrunde, dass ein Drehmoment um die Rotorachse in einer Ausführung ein besonders geeigneter Indikator für die Verstellung der Amplitude der Blattwinkelverstellung zur Unterstützung der Windnachführbewegung durch den Nachführantrieb darstellt, da es einen Last- bzw. Belastungszustand der Windenergieanlage besonders gut widerspiegelt. Beispielsweise führen höhere Windlasten in der Regel zu größeren Rotormomenten und erfordern zugleich eine stärkere Unterstützung einer durch den Nachführantrieb induzierten Windnachführbewegung durch die Blattwinkelverstellung. Zusätzlich oder alternativ kann in einer Ausführung ein, insbesondere zur Steuerung der Windenergieanlage, ohnehin bereits vorliegendes bzw. bekanntes Rotordrehmoment vorteilhaft zusätzlich zur Blattwinkelverstellung zur Unterstützung einer Windnachführbewegung durch den Nachführantrieb verwendet werden.

Entsprechend kann hierdurch in einer Ausführung ein stabile(re)s Betriebsverhalten bei gleichzeitig vorteilhafter Umsetzung von Windenergie in mechanische bzw. elektrische Leistung durch die Windenergieanlage realisiert werden.

In einer Ausführung beträgt die Amplitude der Blattwinkelverstellung zur Unterstützung einer Windnachführbewegung durch den Nachführantrieb gleich Null bzw. wird auf Null gesetzt bzw. eingestellt, falls das Rotordrehmoment, insbesondere betragsmäßig oder vorzeichenbehaftet, einen vorgegebenen Drehmomentgrenzwert unterschreitet, der in einer Ausführung größer Null ist. Mit anderen Worten wird in einer Ausführung eine, insbesondere zyklische, Blattwinkelverstellung zur Unterstützung der Windnachführbewegung durch den Nachführantrieb unterdrückt, falls bzw. solange das Rotordrehmoment, insbesondere betragsmäßig oder vorzeichenbehaftet, einen vorgegebenen Drehmomentgrenzwert unterschreitet.

Dem liegt insbesondere die Idee zugrunde, dass in einer Ausführung einerseits unterhalb gewisser Lasten eine Unterstützung einer durch den Nachführantrieb induzierten Windnachführbewegung durch die Blattwinkelverstellung nicht erforderlich ist, und andererseits durch eine Unterdrückung einer solchen Blattwinkelverstellung bzw. der Reduzierung bzw. Verstellung ihrer Amplitude auf Null eine durch diese Blattwinkelverstellung induzierte Verschlechterung der Umsetzung von Windenergie in mechanische bzw. elektrische Leistung durch die Windenergieanlage vermieden und so eine Umsetzung von Windenergie in mechanische bzw. elektrische Leistung durch die Windenergieanlage verbessert werden kann.

In einer Ausführung wird das Rotordrehmoment auf Basis eines Drehmoment-Sollwertes ermittelt, es kann insbesondere ein Drehmoment-Sollwert sein.

Dem liegt insbesondere die Idee zugrunde, dass in einer Ausführung Soll-Werte gegenüber in der Regel gemessenen Ist-Werten weniger messfehlerbehaftet, insbesondere weniger verrauscht, sind.

In einer Ausführung kann das Rotordrehmoment indirekt ermittelt werden, beispielsweise durch Division einer Leistung an der Rotor- oder einer damit gekoppelten Getriebe- oder Generatorwelle durch eine Drehzahl dieser Welle. Dies kann in einer Ausführung die Ermittlung verbessern, insbesondere vereinfachen und/oder ihre Präzision erhöhen. Allgemein wird unter einem Rotordrehmoment insbesondere ein an dem bzw. auf den Rotor wirkendes bzw. von diesem ausgeübtes Drehmoment verstanden.

Gemäß Anspruch 9 werden zum bzw. beim Betreiben der Windenergieanlage in dem Nachführbetriebsmodus die Blattwinkel der Rotorblätter um ihre (jeweilige) Blattachse zur Unterstützung einer Windnachführbewegung durch den Nachführantrieb verstellt, wobei eine Amplitude dieser Blattwinkelverstellung (auch) in Abhängigkeit von einer Windnachführungsrichtung des Rotors um die Gierachse verstellt wird.

Dem liegt insbesondere die Idee zugrunde, dass - insbesondere bedingt durch den sogenannten Tiltwinkel, das heißt infolge einer (leichten) Neigung der Rotorachse gegen die Horizontale, die in einer Ausführung wenigstens 2° und/oder höchstens 10° beträgt - auch ohne Blattwinkelverstellung aerodynamisch bereits ein Drehmoment um die Gierachse induziert wird, welches in eine Richtung wirkt. Soll nun der Rotor in diese Richtung windnachgeführt bzw. eine Windnachführbewegung durch den Nachführantrieb in diese Richtung durch die Blattwinkelverstellung unterstützt werden, so erfordert dies entsprechend eine geringeres durch die, insbesondere zyklische, Blattwinkelverstellung induziertes Drehmoment um die Gierachse als umgekehrt bei einer Windnachführ(beweg)ung in der entgegengesetzten Richtung bzw. gegen die Richtung, in die das ohne Blattwinkelverstellung induzierte Drehmoment um die Gierachse wirkt bzw. den Rotor zu drehen sucht.

Entsprechend wird in einer Ausführung die Amplitude der Blattwinkelverstellung zur Unterstützung einer Windnachführbewegung durch den Nachführantrieb derart eingestellt, dass sie bei einer ersten Windnachführungsrichtung und bei einer hierzu gegensinnigen zweiten Windnachführungsrichtung, insbesondere bei im Übrigen gleichen (Umgebungs)Bedingungen, einen Offset voneinander aufweisen, wobei dieser Offset in einer Ausführung konstant ist. In einer anderen Ausführung hängt der Offset von einem bzw. dem Rotordrehmoment ab, in einer Weiterbildung linear. Insbesondere kann somit der Offset mit wachsendem Rotordrehmoment, in einer Ausführung (direkt) proportional, anwachsen. In einer Ausführung ist bzw. wird der Offset vorgegeben, insbesondere eingestellt, bzw. vorgeb-, insbesondere einstellbar. Entsprechend ist bzw. wird in einer Ausführung der (dann im Betrieb konstante) Offset oder die Abhängigkeit von dem Rotordrehmoment, insbesondere ein Proportionalitätsfaktor zwischen Rotordrehmoment und Offset, vorgegeben, insbesondere eingestellt, bzw. vorgeb-, insbesondere einstellbar.

Hierdurch kann in einer Ausführung ein stabile(re)s Betriebsverhalten und/oder eine besonders vorteilhafte Umsetzung von Windenergie in mechanische bzw. elektrische Leistung durch die Windenergieanlage realisiert werden.

Gemäß Anspruch 9 werden zum bzw. beim Betreiben der Windenergieanlage in dem Nachführbetriebsmodus die Blattwinkel der Rotorblätter um ihre (jeweilige) Blattachse zur Unterstützung einer Windnachführbewegung durch den Nachführantrieb, insbesondere individuell und/oder zyklisch, verstellt, wobei die Blattwinkel in Abhängigkeit von einer Amplitude dieser Blattwinkelverstellung zusätzlich um einen Vorhaltewinkel derart bzw. mit der Maßgabe verstellt werden, dass auch bei maximaler Blattwinkelverstellung zur Unterstützung einer Windnachführbewegung durch den Nachführantrieb (noch) ein minimaler Blattwinkel eingehalten wird bzw. werden kann. Dabei ist ein Blattwinkel in einer Ausführung maximal, wenn das Rotorblatt eine sogenannte Fahnenstellung aufweist, in der eine Umsetzung von Windenergie in mechanische bzw. elektrische Leistung minimal ist. Entsprechend bezeichnet ein minimaler Blattwinkel eine maximal zulässige Verstellung von der Fahnenstellung weg bzw. hin zu einer Stellung, in der eine Umsetzung von Windenergie in mechanische bzw. elektrische Leistung maximal ist.

Dem liegt insbesondere die Idee zugrunde, dass durch die Blattwinkelverstellung zur Unterstützung einer Windnachführbewegung durch den Nachführantrieb Blattwinkel einen minimalen Blattwinkel unterschreiten könnten, der eine Überlastung der Rotorblätter und/oder einen Strömungsabriss an den Rotorblättern kennzeichnet.

Entsprechend werden in einer Ausführung die Blattwinkel zusätzlich zu der Blattwinkelverstellung zur Unterstützung einer Windnachführbewegung durch den Nachführantrieb um einen von der Amplitude dieser Blattwinkelverstellung abhängigen Vorhaltewinkel verstellt, wobei diese Verstellung um den Vorhaltewinkel vorzugsweise in Richtung der Fahnenstellung der Rotorblätter erfolgt, in der die Umsetzung von Windenergie in mechanische bzw. elektrische Leistung minimal wird bzw. ist.

In einer Ausführung werden die Blattwinkel kollektiv um den (gemeinsamen) Vorhaltewinkel verstellt. Zusätzlich oder alternativ beträgt der Vorhaltewinkel wenigstens 0,5° und/oder höchstens 5°.

Hierdurch kann in einer Ausführung ein stabile(re)s Betriebsverhalten und/oder eine besonders vorteilhafte Umsetzung von Windenergie in mechanische bzw. elektrische Leistung durch die Windenergieanlage realisiert werden.

In einer Ausführung weist das Verfahren die Schritte:
- Ermitteln eines Windnachführbedarfs, in einer Ausführung mittels Ermitteln, insbesondere messtechnisches Erfassen, einer Abweichung zwischen einer, insbesondere aktuellen oder gemittelten, Windrichtung und der Rotorachsrichtung, insbesondere deren horizontaler Komponente;
- Ermitteln der Amplitude der Blattwinkelverstellung zur Unterstützung der Windnachführbewegung durch den Nachführantrieb, in einer Ausführung auf Basis einer insbesondere empirisch und/oder mithilfe einer Simulation, vorgegebenen, insbesondere abgespeicherten und/oder einstellbaren, Abbildung von Windnachführbedarfswerten auf Blattwinkelverstellungsamplitudenwerte, insbesondere mithilfe eines Kennfeldes oder dergleichen; und
- Einstellen der individuellen Blattwinkel der Rotorblätter auf Basis dieser Amplitude,
wobei diese Amplitude in Abhängigkeit von einem Rotordrehmoment um die Rotorachse und/oder einer Windnachführungsrichtung des Rotors um die Gierachse ermittelt wird und/oder die Blattwinkel in Abhängigkeit von einem ermittelten Vorhaltewinkel zur Einhaltung eines minimalen Blattwinkels eingestellt werden.

Entsprechend weist das Verfahren wenigstens einen der Schritte auf:
- Ermitteln des Rotordrehmoments;
- Ermitteln der Windnachführungsrichtung; und/oder
- Ermitteln des Vorhaltewinkels.

Wie bereits erwähnt, ist nach einer Ausführung der vorliegenden Erfindung ein System zum Betreiben der Windenergieanlage, insbesondere hard- und/oder software-, insbesondere programmtechnisch, zur Durchführung eines hier beschriebenen Verfahrens eingerichtet. Entsprechend weist es nach einer Ausführung gemäß Anspruch 15 auf:
- Mittel zum Verstellen von Blattwinkeln der Rotorblätter um ihre Blattachse zur Unterstützung einer Windnachführbewegung durch den Nachführantrieb in einem Nachführbetriebsmodus
sowie wenigstens eines von:
- Mittel zum Verstellen einer Amplitude dieser Blattwinkelverstellung in Abhängigkeit von einem Rotordrehmoment um die Rotorachse und/oder einer Windnachführungsrichtung des Rotors um die Gierachse; und/oder
- Mittel zum Verstellen der Blattwinkel zusätzlich (zu der Blattwinkelverstellung zur Unterstützung einer Windnachführbewegung durch den Nachführantrieb) um einen Vorhaltewinkel in Abhängigkeit von einer Amplitude dieser Blattwinkelverstellung (zur Unterstützung einer Windnachführbewegung durch den Nachführantrieb)zur Einhaltung eines minimalen Blattwinkels.

Nach einer Ausführung gemäß Anspruch 2 werden zum bzw. beim Betreiben der Windenergieanlage in dem Nachführbetriebsmodus die Blattwinkel der Rotorblätter um ihre (jeweilige) Blattachse zur Unterstützung einer Windnachführbewegung durch den Nachführantrieb verstellt, wobei der Nachführantrieb zum Windnachführen des Rotors um die Gierachse um eine vorgegebene, in einer Ausführung einstellbare, insbesondere konstante, oder variable Wartezeit nach der Blattwinkelverstellung der Rotorblätter um ihre Blattachse zur Unterstützung dieser Windnachführbewegung aktiviert wird.

In einer Ausführung wird somit zunächst die Blattwinkelverstellung der Rotorblätter zur Unterstützung der Windnachführbewegung aktiviert und nach der Wartezeit dann der Nachführantrieb zur Ausführung dieser durch ihn induzierten Windnachführbewegung. Sofern in einer bevorzugten Ausführung die Windenergieanlage wenigstens eine Feststellbremse aufweist, wird in einer Ausführung nach einer vorgegebenen, in einer Ausführung einstellbaren, insbesondere konstanten, oder variablen (ersten) Abwartezeit nach dem Aktivieren der Blattwinkelverstellung zunächst diese Feststellbremse gelöst und nach einer vorgegebenen, in einer Ausführung einstellbaren, insbesondere konstanten, oder variablen weiteren (zweiten) Abwartezeit nach dem Lösen der Feststellbremse der Nachführantrieb aktiviert, so dass der Nachführantrieb um eine Wartezeit nach der Blattwinkelverstellung zur Unterstützung der Windnachführbewegung aktiviert wird, die gleich der Summe dieser beiden Abwartezeiten ist.

Dem liegt insbesondere die Idee zugrunde, dass am Anfang eines Nachführbetriebsmodus, beispielsweise aufgrund von Massenträgheiten, Haftreibung oder dergleichen, besonders hohe Lasten auf den Antrieb wirken können. Indem die Blattwinkelverstellung zur Unterstützung einer Windnachführbewegung durch den Nachführantrieb bereits vorab aktiviert wird, können so in einer Ausführung vorteilhaft durch die Blattwinkelverstellung hohe Anfangslasten wenigstens teilweise abgefangen bzw. kompensiert werden. Zusätzlich oder alternativ kann in einer Ausführung durch einen solchen Vorlauf der Blattwinkelverstellung zur Unterstützung einer Windnachführbewegung durch den Nachführantrieb vorteilhaft ein entsprechendes unterstützendes, aerodynamisch induziertes Drehmoment bereits stärker ausgeprägt bzw. -bildet sein.

Auf diese Weise können in einer Ausführung Lasten des Nachführantriebs reduziert, insbesondere also mit gleichbleibenden Nachführantrieben größere Windenergieanlagen bzw. gleichbleibende Windenergieanlagen mit kleineren Nachführantrieb(slast)en betrieben werden.

In einer Ausführung wird die Wartezeit in Abhängigkeit von einer Rotordrehfrequenz, einer Windgeschwindigkeit und/oder einem Rotordrehmoment um die Rotorachse vorgegeben.

Der Vorgabe in Abhängigkeit von einer Rotordrehfrequenz liegt insbesondere die Idee zugrunde, dass bei höheren Rotordrehfrequenzen durch die Blattwinkelverstellung zur Unterstützung einer Windnachführbewegung durch den Nachführantrieb rascher ein entsprechendes, insbesondere ausreichendes, unterstützendes Drehmoment um die Gierachse aufgebaut werden kann. Entsprechend wird in einer Ausführung bei einer ersten Rotordrehfrequenz der Nachführantrieb zum Windnachführen des Rotors um die Gierachse um eine erste Wartezeit nach der Blattwinkelverstellung der Rotorblätter um ihre Blattachse zur Unterstützung dieser Windnachführbewegung aktiviert und bei einer höheren zweiten Rotordrehfrequenz um eine kürzere zweite Wartezeit nach der Blattwinkelverstellung.

Analog liegt auch der Vorgabe in Abhängigkeit von einer Windgeschwindigkeit insbesondere die Idee zugrunde, dass bei höheren Windgeschwindigkeiten durch die Blattwinkelverstellung zur Unterstützung einer Windnachführbewegung durch den Nachführantrieb rascher ein entsprechendes, insbesondere ausreichendes, unterstützendes Drehmoment um die Gierachse aufgebaut werden kann. Entsprechend wird in einer Ausführung bei einer ersten Windgeschwindigkeiten der Nachführantrieb zum Windnachführen des Rotors um die Gierachse um eine erste Wartezeit nach der Blattwinkelverstellung der Rotorblätter um ihre Blattachse zur Unterstützung dieser Windnachführbewegung aktiviert und bei einer höheren zweiten Windgeschwindigkeiten um eine kürzere zweite Wartezeit nach der Blattwinkelverstellung.

Der Vorgabe in Abhängigkeit von einem Rotordrehmoment liegt insbesondere die bereits erläuterte Idee zugrunde, dass ein Drehmoment um die Rotorachse einen besonders geeigneten Indikator für die (Einstellung der) Wartezeit darstellen kann, da es einen Last- bzw. Belastungszustand der Windenergieanlage besonders gut widerspiegelt. Beispielsweise führen höhere Windlasten in der Regel zu größeren Rotormomenten und erfordern zugleich eine stärkere Unterstützung einer durch den Nachführantrieb induzierten Windnachführbewegung durch die Blattwinkelverstellung. Zusätzlich oder alternativ kann in einer Ausführung ein, insbesondere zur Steuerung der Windenergieanlage, ohnehin bereits vorliegendes bzw. bekanntes Rotordrehmoment zusätzlich zur Ermittlung der Wartezeit verwendet werden. Entsprechend wird in einer Ausführung bei einem ersten Rotordrehmoment der Nachführantrieb zum Windnachführen des Rotors um die Gierachse um eine erste Wartezeit nach der Blattwinkelverstellung der Rotorblätter um ihre Blattachse zur Unterstützung dieser Windnachführbewegung aktiviert und bei einem höheren zweiten Rotordrehmoment um eine längere zweite Wartezeit nach der Blattwinkelverstellung.

Hierdurch kann jeweils, insbesondere in Kombination von zwei oder drei der vorstehend genannten Einflussgrößen Rotordrehfrequenz, Windgeschwindigkeit und Rotordrehmoment, vorteilhaft situationsangepasst eine kurze Wartezeit realisiert und dadurch die Windnachführung insgesamt beschleunigt werden.

In einer Ausführung wird der Nachführantrieb zum Windnachführen des Rotors um die Gierachse zusammen bzw., wenigstens im Wesentlichen, gleichzeitig mit der Blattwinkelverstellung der Rotorblätter um ihre Blattachse zur Unterstützung dieser Windnachführbewegung deaktiviert.

Dem liegt insbesondere die Idee zugrunde, dass am Ende eines Nachführbetriebsmodus kleine(re) Lasten auf den Antrieb wirken können. Indem die Blattwinkelverstellung zur Unterstützung einer Windnachführbewegung zusammen mit dem Nachführantrieb deaktiviert wird, kann in einer Ausführung eine Verschlechterung der Umsetzung von Windenergie in mechanische bzw. elektrische Leistung infolge dieser Blattwinkelverstellung rascher beendet und so die Umsetzung von Windenergie in mechanische bzw. elektrische Leistung durch die Windenergieanlage verbessert werden.

In einer anderen Ausführung wird der Nachführantrieb zum Windnachführen des Rotors um die Gierachse um eine vorgegebene Vorlaufzeit vor der Blattwinkelverstellung der Rotorblätter um ihre Blattachse zur Unterstützung dieser Windnachführbewegung deaktiviert.

Auf diese Weise können in einer Ausführung Lasten des Nachführantriebs weiter reduziert, insbesondere also mit gleichbleibenden Nachführantrieben größere Windenergieanlagen bzw. gleichbleibende Windenergieanlagen mit kleineren Nachführantrieb(slast)en betrieben werden.

In einer Ausführung beträgt die Wartezeit zwischen der Aktivierung der Blattwinkelverstellung und der Aktivierung des Nachführantriebs wenigstens 0,25 Sekunden bzw. 250 ms, insbesondere wenigstens 0,5 Sekunden bzw. 500 ms, und/oder höchstens 30 Sekunden, insbesondere höchstens 5 Sekunden, in einer Ausführung höchstens 2,5 Sekunden.

Auf diese Weise können in einer Ausführung gleichermaßen die Dauer der Windnachführung und die Belastung des Nachführantriebs minimiert werden.

Erfindungsgemäß werden gemäß Anspruch 1 zum bzw. beim Betreiben der Windenergieanlage in dem Nachführbetriebsmodus die Blattwinkel der Rotorblätter um ihre (jeweilige) Blattachse zur Unterstützung einer Windnachführbewegung durch den Nachführantrieb verstellt, wobei eine kommandierte Phasenverschiebung einer Amplitude dieser Blattwinkelverstellung gegenüber einer rotorfesten Referenzwinkellage um die Rotorachse in Abhängigkeit von einer Rotordrehfrequenz des Rotors um die Rotorachse dynamisch verstellt wird. Die rotorfeste Referenzwinkellage wird in einer Ausführung auf Basis einer ermittelten, insbesondere messtechnisch erfassten, Rotor(dreh)position ermittelt.

Insbesondere aufgrund von mechanischen, hydraulischen, elektrischen, insbesondere elektromotorischen bzw. -magnetischen und/oder signaltechnischen Trägheiten wird eine kommandierte Amplitude der Blattwinkelverstellung erst mit einer gewissen Verzögerung realisiert. Zudem bedingt die transiente Aerodynamik eine Verzögerung beim Aufbau des durch die Blattwinkelverstellung induzierten unterstützenden Drehmoments um die Gierachse. Hierdurch wird die Unterstützung einer durch den Nachführantrieb induzierten Windnachführbewegung durch die Blattwinkelverstellung beeinträchtigt.

Diese Verzögerungen können durch eine Phasenverschiebung der kommandierten Amplitude der Blattwinkelverstellung gegenüber einer rotorfesten Referenzwinkellage wenigstens teilweise kompensiert und so die Unterstützung verbessert werden.

Sind, wie vorstehend bereits erläutert, die individuellen (Amplituden der) Blattwinkelverstellung(en) der einzelnen Rotorblätter gegeneinander um die Rotorachse phasenverschoben, so werden in einer Ausführung entsprechend alle (Amplituden der) Blattwinkelverstellung(en) der einzelnen Rotorblätter zusätzlich um denselben Wert gegenüber einer rotorfesten Referenzwinkellage um die Rotorachse phasenverschoben, der somit eine kommandierte Phasenverschiebung einer Amplitude der Blattwinkelverstellung zur Unterstützung einer Windnachführbewegung durch den Nachführantrieb im Sinne der vorliegenden Erfindung darstellt. Eine kommandierte Phasenverschiebung im Sinne der vorliegenden Erfindung ist in einer Ausführung eine Phasenverschiebung, die, insbesondere aktuell, von einer Steuerung und/oder als ein Soll-Wert ausgegeben wird bzw. ein, insbesondere aktueller, Soll-Wert.

Der dynamischen Verstellung der kommandierten Phasenverschiebung in Abhängigkeit von einer Rotordrehfrequenz liegt insbesondere die Idee zugrunde, dass bei höheren Rotordrehfrequenzen die kommandierte Phasenverschiebung sozusagen stärker vorgehalten werden muss, um eine Unterstützung einer Windnachführbewegung durch den Nachführantrieb aerodynamisch rechtzeitig und in ausreichender Höhe zur Verfügung stellen zu können.

Entsprechend weist in einer Ausführung die kommandierte Phasenverschiebung für einen ersten Wert der Rotordrehfrequenz einen ersten Phasenverschiebungswert und für einen größeren zweiten Wert der Rotordrehfrequenz einen, insbesondere betragsmäßig, größeren zweiten Phasenverschiebungswert auf.

Zusätzlich zu einem rotordrehfrequenzabhängigen bzw. dynamischen Anteil kann die kommandierte Phasenverschiebung in einer Ausführung auch einen von der Rotordrehfrequenz unabhängigen bzw. statischen Anteil aufweisen.

Hierdurch können in einer Ausführung vorteilhaft mechanische, hydraulische, elektrische, insbesondere elektromotorische bzw. -magnetische und/oder signaltechnische Trägheiten wenigstens teilweise kompensiert werden.

In einer Ausführung weist das Verfahren die Schritte:
- Ermitteln eines Windnachführbedarfs, in einer Ausführung mittels Ermitteln, insbesondere messtechnisches Erfassen, einer Abweichung zwischen einer, insbesondere aktuellen oder gemittelten, Windrichtung und der Rotorachsrichtung, insbesondere deren horizontaler Komponente;
- Ermitteln der Amplitude der Blattwinkelverstellung zur Unterstützung der Windnachführbewegung durch den Nachführantrieb, in einer Ausführung auf Basis einer insbesondere empirisch und/oder mithilfe einer Simulation, vorgegebenen, insbesondere abgespeicherten und/oder einstellbaren, Abbildung von Windnachführbedarfswerten auf Blattwinkelverstellungsamplitudenwerte, insbesondere mithilfe eines Kennfeldes oder dergleichen; und
- Einstellen der individuellen Blattwinkel der Rotorblätter auf Basis dieser Amplitude,

sowie die Schritte:
   - Ermitteln einer Rotordrehfrequenz;
   - Ermitteln einer Phasenverschiebung der Amplitude in Abhängigkeit von der Rotordrehfrequenz; und
   - Einstellen der individuellen Blattwinkel der Rotorblätter auf Basis dieser Phasenverschiebung;
und/oder den Schritt:
   - Aktivieren des Nachführantriebs zum Windnachführen des Rotors um die Gierachse um eine vorgegebene Wartezeit nach Aktivieren der Blattwinkelverstellung der Rotorblätter um ihre Blattachse zur Unterstützung dieser Windnachführbewegung
auf. In einer Ausführung wird eine Rotor(dreh)position ermittelt, insbesondere messtechnisch erfasst, und eine rotorfeste Referenzwinkellage, auf die die Phasenverschiebung bezogen ist, auf Basis dieser Rotor(dreh)position ermittelt.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere die Windenergieanlage betreiben kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. sein(e) Mittel.

In einer Ausführung weist das System die Windenergieanlage auf.

Ein Aspekt der vorliegenden Erfindung betrifft gemäß Anspruch 16 ein Verfahren zum Betreiben einer Windenergieanlage nach einem der Ansprüche 1 bis 7, wobei eine Amplitude dieser Blattwinkelverstellung
- um oder auf einen vorgegebenen Wert reduziert wird, falls eine Giergeschwindigkeit des Rotors um die Gierachse in einem vorgegebenen Reduzier-Geschwindigkeitsbereich liegt, der eine untere Reduzier-Geschwindigkeitsgrenze aufweist; und/oder
- um oder auf einen vorgegebenen Wert erhöht wird, falls eine Giergeschwindigkeit des Rotors um die Gierachse in einem vorgegebenen Erhöhungs-Geschwindigkeitsbereich liegt, der eine obere Erhöhungs-Geschwindigkeitsgrenze aufweist.

In einer Weiterbildung diesesAspekts ist das Verfahren dadurch gekennzeichnet, dass in dem Nachführbetriebsmodus die Amplitude der Blattwinkelverstellung zur Unterstützung einer Windnachführbewegung durch den Nachführantrieb
- um oder auf einen vorgegebenen Wert reduziert wird, falls die Giergeschwindigkeit in einem vorgegebenen zweiten Reduzier-Geschwindigkeitsbereich liegt, der eine zweite untere Reduzier-Geschwindigkeitsgrenze aufweist; und/oder
- um oder auf einen vorgegebenen Wert erhöht wird, falls die Giergeschwindigkeit in einem vorgegebenen zweiten Erhöhungs-Geschwindigkeitsbereich liegt, der eine zweite obere Erhöhungs-Geschwindigkeitsgrenze liegt.

Zusätzlich oder alternativ ist das Verfahren in einer Weiterbildung dieses Aspekts dadurch gekennzeichnet, dass im Nachführbetriebsmodus
- wenigstens ein, insbesondere wenigstens zwei, und/oder höchstens vier Reduzier-Geschwindigkeitsbereiche, insbesondere genau ein oder zwei Reduzier-Geschwindigkeitsbereiche, vorgesehen sind, für die die Amplitude der Blattwinkelverstellung jeweils geschwindigkeitsbereichspezifisch reduziert wird; und/oder
- wenigstens ein, insbesondere wenigstens zwei, und/oder höchstens vier Erhöhungs-Geschwindigkeitsbereiche, insbesondere genau ein oder zwei Erhöhungs-Geschwindigkeitsbereiche, vorgesehen sind, für die die Amplitude der Blattwinkelverstellung jeweils geschwindigkeitsbereichspezifisch erhöht wird.

In einer Weiterbildung des Aspekts, insbesondere einer seiner oben genannten Weiterbildungen, ist das Verfahren dadurch gekennzeichnet, dass ein Geschwindigkeitsbereich sich über wenigstens 0,05° pro Sekunde erstreckt.

In einer Weiterbildung des Aspekts, insbesondere einer seiner oben genannten Weiterbildungen, ist das Verfahren gekennzeichnet durch die Schritte:
- Ermitteln eines Windnachführbedarfs;
- Ermitteln der Amplitude der Blattwinkelverstellung zur Unterstützung der Windnachführbewegung durch den Nachführantrieb;
- Einstellen der individuellen Blattwinkel der Rotorblätter auf Basis dieser Amplitude
- Ermitteln eines Ist-Wertes der Giergeschwindigkeit des Rotors um die Gierachse;
- stufenförmiges Reduzieren der ermittelten Amplitude, falls der Ist-Wert einen oder mehrere vorgegebene Geschwindigkeitsgrenzen überschreitet; und/oder stufenförmiges Erhöhen der ermittelten Amplitude, falls der Ist-Wert einen oder mehrere vorgegebene Geschwindigkeitsgrenzen unterschreitet; sowie
- Einstellen der individuellen Blattwinkel der Rotorblätter auf Basis dieser Amplitude.

Der Aspekt der vorliegenden Erfindung betrifft gemäß Anspruch 21 auch ein System nach Anspruch 8, wobei das System zur Durchführung eines Verfahrens nach einem der Ansprüche 16 bis 20 eingerichtet ist und/oder aufweist:
- Mittel zum Verstellen von Blattwinkeln der Rotorblätter um ihre Blattachse zur Unterstützung einer Windnachführbewegung durch den Nachführantrieb in einem Nachführbetriebsmodus sowie
- Mittel zum Reduzieren einer Amplitude dieser Blattwinkelverstellung um oder auf einen vorgegebenen Wert, falls eine Giergeschwindigkeit des Rotors um die Gierachse in einem vorgegebenen Reduzier-Geschwindigkeitsbereich liegt, der einer untere Reduzier-Geschwindigkeitsgrenze aufweist; und/oder
- Mittel zum Erhöhen einer Amplitude dieser Blattwinkelverstellung um oder auf einen vorgegebenen Wert, falls eine Giergeschwindigkeit des Rotors um die Gierachse in einem vorgegebenen Erhöhungs-Geschwindigkeitsbereich liegt, der eine obere Erhöhungs-Geschwindigkeitsgrenze aufweist.

Ein Aspekt der vorliegenden Erfindung betrifft gemäß Anspruch 9 ein Verfahren zum Betreiben einer Windenergieanlage nach einem der Ansprüche 1 bis 7, wobei eine Amplitude dieser Blattwinkelverstellung in Abhängigkeit von
- einem Rotordrehmoment um die Rotorachse und/oder
- einer Windnachführungsrichtung des Rotors um die Gierachse verstellt wird; und/oder wobei
- die Blattwinkel in Abhängigkeit von einer Amplitude dieser Blattwinkelverstellung zusätzlich um einen Vorhaltewinkel zur Einhaltung eines minimalen Blattwinkels verstellt werden.

In einer Weiterbildung dieses Aspekts ist das Verfahren dadurch gekennzeichnet, dass die Amplitude der Blattwinkelverstellung zur Unterstützung einer Windnachführbewegung durch den Nachführantrieb gleich Null ist, falls das Rotordrehmoment einen vorgegebenen Drehmomentgrenzwert unterschreitet.

Zusätzlich oder alternativ ist das Verfahren in einer Weiterbildung dieses Aspekts dadurch gekennzeichnet, dass das Rotordrehmoment auf Basis eines Drehmoment-Sollwertes ermittelt wird.

In einer Weiterbildung des Aspekts, insbesondere einer seiner oben genannten Weiterbildungen, ist das Verfahren dadurch gekennzeichnet, dass die Amplitude der Blattwinkelverstellung zur Unterstützung einer Windnachführbewegung durch den Nachführantrieb bei einer ersten Windnachführungsrichtung und die Amplitude der Blattwinkelverstellung zur Unterstützung einer Windnachführbewegung durch den Nachführantrieb bei einer hierzu gegensinnigen zweiten Windnachführungsrichtung einen, insbesondere vorgegebenen und/oder konstanten oder von einem Rotordrehmoment abhängigen , Offset aufweisen.

In einer Weiterbildung des Aspekts, insbesondere einer seiner oben genannten Weiterbildungen, ist das Verfahren dadurch gekennzeichnet, dass die Blattwinkel kollektiv um den Vorhaltewinkel verstellt werden.

In einer Weiterbildung des Aspekts, insbesondere einer seiner oben genannten Weiterbildungen, ist das Verfahren gekennzeichnet durch die Schritte:
- Ermitteln eines Windnachführbedarfs;
- Ermitteln der Amplitude der Blattwinkelverstellung zur Unterstützung der Windnachführbewegung durch den Nachführantrieb; und
- Einstellen der individuellen Blattwinkel der Rotorblätter auf Basis dieser Amplitude,
wobei diese Amplitude in Abhängigkeit von einem Rotordrehmoment um die Rotorachse und/oder einer Windnachführungsrichtung des Rotors um die Gierachse ermittelt wird und/oder die Blattwinkel in Abhängigkeit von einem ermittelten Vorhaltewinkel zur Einhaltung eines minimalen Blattwinkels eingestellt werden.

Ein Aspekt der vorliegenden Erfindung betrifft gemäß Anspruch 15 auch ein System nach Anspruch 8, wobei das System zur Durchführung eines Verfahrens nach einem der Ansprüche 9 bis 14 eingerichtet **ist und/oder** aufweist:
- Mittel zum Verstellen von Blattwinkeln der Rotorblätter um ihre Blattachse zur Unterstützung einer Windnachführbewegung durch den Nachführantrieb in einem Nachführbetriebsmodus sowie
- Mittel zum Verstellen einer Amplitude dieser Blattwinkelverstellung in Abhängigkeit von einem Rotordrehmoment um die Rotorachse und/oder einer Windnachführungsrichtung des Rotors um die Gierachse; und/oder
- Mittel zum Verstellen der Blattwinkel zur Einhaltung eines minimalen Blattwinkels zusätzlich um einen Vorhaltewinkel in Abhängigkeit von einer Amplitude dieser Blattwinkelverstellung .

Ein Aspekt der vorliegenden Erfindung betrifft gemäß Anspruch 1 ein Verfahren zum Betreiben einer Windenergieanlage, die
einen um eine Rotorachse drehbaren Rotor mit wenigstens zwei individuell um ihre Blattachse verstellbaren Rotorblättern und
einen Nachführantrieb zum Windnachführen des Rotors um eine Gierachse aufweist, wobei in einem Nachführbetriebsmodus Blattwinkel der Rotorblätter um ihre Blattachse zur Unterstützung einer Windnachführbewegung durch den Nachführantrieb verstellt werden, wobei eine kommandierte Phasenverschiebung einer Amplitude dieser Blattwinkelverstellung gegenüber einer rotorfesten Referenzwinkellage um die Rotorachse in Abhängigkeit von einer Rotordrehfrequenz des Rotors um die Rotorachse dynamisch verstellt wird.

In einer Weiterbildung diesesAspekts ist das Verfahren dadurch gekennzeichnet, dass der Nachführantrieb zum Windnachführen des Rotors um die Gierachse um eine vorgegebene Wartezeit nach der Blattwinkelverstellung der Rotorblätter um ihre Blattachse zur Unterstützung dieser Windnachführbewegung aktiviert wird, wobei die Wartezeit in Abhängigkeit von einer Rotordrehfrequenz, einer Windgeschwindigkeit und/oder einem Rotordrehmoment um die Rotorachse vorgegeben wird.

Zusätzlich oder alternativ ist das Verfahren in einer Weiterbildung dieses Aspekts dadurch gekennzeichnet, dass der Nachführantrieb zum Windnachführen des Rotors um die Gierachse zusammen mit der Blattwinkelverstellung der Rotorblätter um ihre Blattachse zur Unterstützung dieser Windnachführbewegung oder um eine vorgegebene Vorlaufzeit vor dieser Blattwinkelverstellung deaktiviert wird.

In einer Weiterbildung des Aspekts, insbesondere einer seiner oben genannten Weiterbildungen, ist das Verfahren dadurch gekennzeichnet, dass die Wartezeit wenigstens 0,25 Sekunden und/oder höchstens 30 Sekunden beträgt.

In einer Weiterbildung des Aspekts, insbesondere einer seiner oben genannten Weiterbildungen, ist das Verfahren dadurch gekennzeichnet, dass die kommandierte Phasenverschiebung zusätzlich einen von der Rotordrehfrequenz unabhängigen statischen Anteil aufweist.

In einer Weiterbildung des Aspekts, insbesondere einer seiner oben genannten Weiterbildungen, ist das Verfahren dadurch gekennzeichnet, dass die kommandierte Phasenverschiebung für einen ersten Wert der Rotordrehfrequenz einen ersten Phasenverschiebungswert und für einen größeren zweiten Wert der Rotordrehfrequenz einen größeren zweiten Phasenverschiebungswert aufweist.

In einer Weiterbildung des Aspekts, insbesondere einer seiner oben genannten Weiterbildungen, weist das Verfahren die Schritte auf:
- Ermitteln eines Windnachführbedarfs;
- Ermitteln der Amplitude der Blattwinkelverstellung zur Unterstützung der Windnachführbewegung durch den Nachführantrieb; und
- Einstellen der individuellen Blattwinkel der Rotorblätter auf Basis dieser Amplitude,

wobei das Verfahren die Schritte:
   - Ermitteln einer Rotordrehfrequenz;
   - Ermitteln einer Phasenverschiebung der Amplitude in Abhängigkeit von der Rotordrehfrequenz; und
   - Einstellen der individuellen Blattwinkel der Rotorblätter auf Basis dieser Phasenverschiebung;
und/oder den Schritt:
   - Aktivieren des Nachführantriebs zum Windnachführen des Rotors um die Gierachse um eine vorgegebene Wartezeit nach Aktivieren der Blattwinkelverstellung der Rotorblätter um ihre Blattachse zur Unterstützung dieser Windnachführbewegung aufweist.

Ein Aspekt der vorliegenden Erfindung betrifft gemäß Anspruch 8 ein System zum Betreiben einer Windenergieanlage, die einen um eine Rotorachse drehbaren Rotor mit wenigstens zwei individuell um ihre Blattachse verstellbaren Rotorblättern und einen Nachführantrieb zum Windnachführen des Rotors um eine Gierachse aufweist,
wobei das System zur Durchführung eines Verfahrens nach einem der Ansprüche 1 bis 7 eingerichtet ist und/oder aufweist:
- Mittel zum Verstellen von Blattwinkeln der Rotorblätter um ihre Blattachse zur Unterstützung einer Windnachführbewegung durch den Nachführantrieb in einem Nachführbetriebsmodus sowie
- Mittel zum dynamischen Verstellen einer kommandierten Phasenverschiebung einer Amplitude dieser Blattwinkelverstellung gegenüber einer rotorfesten Referenzwinkellage um die Rotorachse in Abhängigkeit von einer Rotordrehfrequenz des Rotors um die Rotorachse.

Die Erfindung betrifft auch ein Computerprogrammprodukt gemäß Anspruch 22.

Weitere Vorteile und Merkmale ergeben sich aus den Unteransprüchen und den Ausführungsbeispielen. Hierzu zeigt, teilweise schematisiert:
Fig. 1: ein System zum Betreiben einer Windenergieanlage nach einer Ausführung der vorliegenden Erfindung;
Fig. 2: ein Verfahren zum Betreiben der Windenergieanlage;
Fig. 3: ein Verfahren zum Betreiben der Windenergieanlage;
Fig. 4: ein Verfahren zum Betreiben der Windenergieanlage.

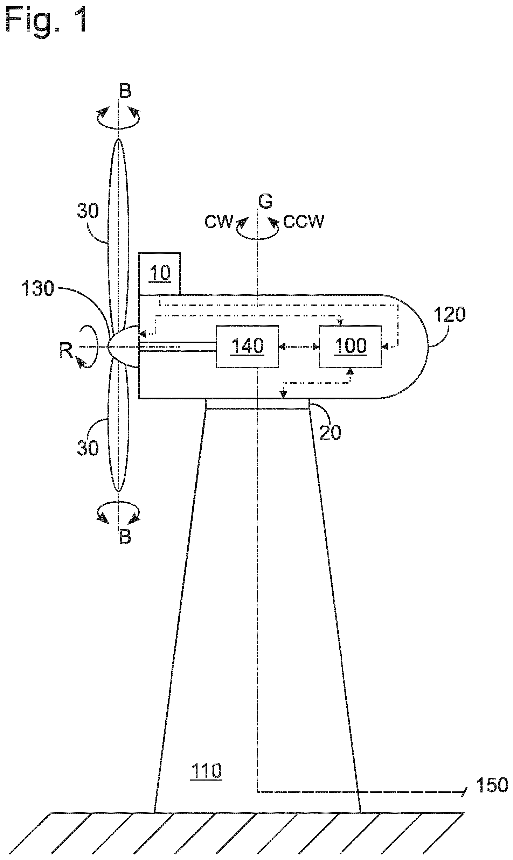

Fig. 1 zeigt ein System zum Betreiben einer Windenergieanlage nach einer Ausführung der vorliegenden Erfindung.

Die Windenergieanlage weist einen Turm 110 auf, auf dem eine Gondel 120 um eine wenigstens im Wesentlichen vertikale Gierachse G drehbar gelagert ist.

An der Gondel 120 ist ein Rotor 130 um eine Rotorachse R drehbar gelagert, der einen Generator oder eine Getriebe-Generator-Einheit 140 aufweist bzw. hiermit gekoppelt ist, um elektrische Energie in ein Stromnetz 150 einzuspeisen.

Der Rotor weist im Ausführungsbeispiel drei individuell um ihre (jeweilige) Blattachse B verstellbaren Rotorblättern 30 auf. Hierzu steuert eine Steuerung 100 entsprechende Blattverstelleinrichtung (nicht dargestellt).

Die Windenergieanlage weist einen Nachführantrieb 20 mit einem oder mehreren Elektromotor(en) und/oder Getriebe(n) zum windrichtungsabhängigen Verdrehen bzw. Windnachführen der Gondel 120 und damit des Rotors 130 um die Gierachse G auf, der ebenfalls von der Steuerung 100 gesteuert wird.

Die Steuerung 100 führt ein Verfahren zum Betreiben der Windenergieanlage nach einer Ausführung der vorliegenden Erfindung aus.

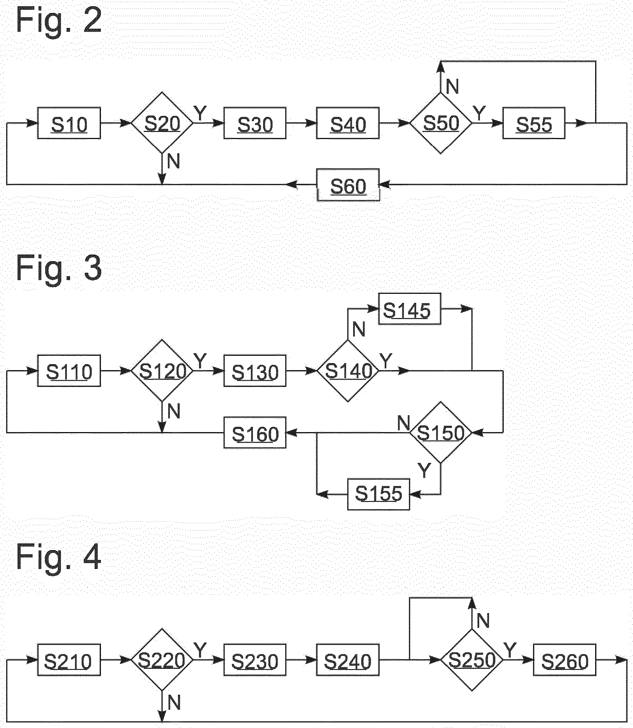

In einer Ausführung, die in Fig. 2 dargestellt ist, ermittelt die Steuerung 100 in einem ersten Schritt S10 mithilfe einer Windfahne 10 eine Abweichung zwischen einer Windrichtung und der Horizontalkomponente der (in die Gondel 120 hinein orientierten) Rotorachse.

Überschreitet diese Abweichung einen vorgegebenen Mindestwert (S20: "Y"), ermittelt die Steuerung 100, dass ein Windnachführbedarf vorliegt, und schaltet in einen Nachführbetriebsmodus, andernfalls (S20: "N") kehrt das Verfahren bzw. die Steuerung zu Schritt S10 zurück.

Im Nachführbetriebsmodus ermittelt sie in einem Schritt S30 eine Amplitude einer zyklischen Blattwinkelverstellung der Rotorblätter 30 zur Unterstützung einer Windnachführbewegung durch den Nachführantrieb, um die Gondel 120 und damit den Rotor 130 um die Gierachse G derart zu verdrehen, dass die Abweichung reduziert wird ("Windnachführbewegung durch den Nachführantrieb"). Diese Amplitude kann beispielsweise ein abgespeicherter, konstanter oder aus einem Kennfeld ausgelesener Referenzwert sein.

In einem Schritt S40 verstellt sie die Blattwinkel der Rotorblätter 30 entsprechend dieser Amplitude und steuert zudem den Nachführantrieb 20 so, dass er die Gondel 120 und damit den Rotor 130 um die Gierachse G derart verdreht, dass die Abweichung reduziert wird.

Außerdem ermittelt sie in Schritt S40 einen Ist-Wert der Giergeschwindigkeit der Gondel und damit des Rotors um die Gierachse.

Falls dieser Wert eine vorgegebene (erste) untere Reduzier-Geschwindigkeitsgrenze überschreitet (S50: "Y"), wird in einem Schritt S55 die in Schritt S30 ermittelte Amplitude auf oder um einen vorgegebenen Wert reduziert und das Verfahren bzw. die Steuerung fährt mit Schritt S60 fort.

Andernfalls (S50: "N") fährt das Verfahren bzw. die Steuerung direkt mit Schritt S60 fort, d.h. ohne Reduzierung der in Schritt S30 ermittelten Amplitude.

In Schritt S60 steuert die Steuerung 100 die Blattverstelleinrichtung derart, dass die individuellen Blattwinkel der Rotorblätter 30 zyklisch mit dieser in Schritt S30 ermittelten und gegebenenfalls in Schritt S55 reduzierten Amplitude verstellt werden und so die in Schritt S60 fortgeführte Windnachführbewegung durch den Nachführantrieb 20 weiterhin unterstützen.

Anschließend kehrt das Verfahren bzw. die Steuerung zu Schritt S10 zurück.

In einer weiteren Ausführung, die in Fig. 3 dargestellt ist, ermittelt die Steuerung 100 in einem ersten Schritt S110 mithilfe der Windfahne 10 eine Abweichung zwischen einer Windrichtung und der Horizontalkomponente der (in die Gondel 120 hinein orientierten) Rotorachse.

Überschreitet diese Abweichung einen vorgegebenen Mindestwert (S120: "Y"), ermittelt die Steuerung 100, dass ein Windnachführbedarf vorliegt, und schaltet in einen Nachführbetriebsmodus, andernfalls (S120: "N") kehrt das Verfahren bzw. die Steuerung zu Schritt S110 zurück.

Im Nachführbetriebsmodus ermittelt sie in Schritt S130 einen Sollwert für ein Rotordrehmoment, beispielsweise auf Basis einer Leistungsanforderung an die Windenergieanlage oder dergleichen, eine Windnachführungsrichtung des Rotors um die Gierachse (durch "CW" ("ClockWise"), "CCW" ("CounterClockWise") in Fig. 1 angedeutet) sowie eine Amplitude einer Blattwinkelverstellung zur Unterstützung einer Windnachführbewegung durch den Nachführantrieb. Diese Amplitude kann beispielsweise ein abgespeicherter, konstanter oder aus einem Kennfeld ausgelesener Referenzwert sein.

Sind die Windnachführungsrichtung und die Richtung, in die der Rotor 130 bedingt durch den Tiltwinkel ohne Blattwinkelverstellung zur Unterstützung einer Windnachführbewegung durch den Nachführantrieb die Gondel 120 zu drehen sucht, gegensinnig (S140: "Y"), wird dieser Amplitude in einem Schritt S145 ein konstanter Offset hinzugefügt, und die Steuerung bzw. das Verfahren fährt mit Schritt S150 fort. Dies erfolgt bei den zumeist üblichen, mit dem Wind von vorne auf den Rotor schauend rechtsdrehenden Rotoren bei einem Nachführbedarf in CCW-Richtung bzw. im Gegenuhrzeigersinn. Andernfalls (S140: "N") fährt die Steuerung bzw. das Verfahren direkt mit Schritt S150 fort. In einer Abwandlung kann umgekehrt die in Schritt S130 ermittelte Amplitude in einem Schritt S145 um einen konstanten Offset reduziert werden, wenn die Windnachführungsrichtung und die Richtung, in die der Rotor 130 ohne Blattwinkelverstellung zur Unterstützung einer Windnachführbewegung durch den Nachführantrieb die Gondel 120 zu drehen sucht, gleich- bzw. nicht gegensinnig sind. In einer vorteilhaften alternativen Ausführung ist der Offset nicht konstant sondern proportional zu dem in Schritt S130 ermittelten Sollwert für das Rotordrehmoment.

Unterschreitet das Rotordrehmoment bzw. der (Rotor)Drehmoment-Sollwert einen vorgegebenen Drehmomentgrenzwert (S150: "Y"), setzt die Steuerung in einem Schritt S155 die Amplitude der Blattwinkelverstellung zur Unterstützung einer Windnachführbewegung durch den Nachführantrieb auf Null und fährt mit Schritt S160 fort, andernfalls (S150: "N") fährt die Steuerung bzw. das Verfahren direkt mit Schritt S160 fort.

In Schritt S160 ermittelt die Steuerung 100 in Abhängigkeit von der in Schritt S130, S145 bzw. 155 ermittelten Amplitude der Blattwinkelverstellung einen Vorhaltewinkel zur Einhaltung eines minimalen Blattwinkels und verstellt die Blattwinkel zyklisch mit der Amplitude sowie zusätzlich kollektiv um diesen Vorhaltewinkel. Außerdem steuert sie den Nachführantrieb 20 so, dass er die Gondel 120 und damit den Rotor 130 um die Gierachse G derart verdreht, dass die Abweichung reduziert wird.

In einer weiteren Ausführung, die in Fig. 4 dargestellt ist, ermittelt die Steuerung 100 in einem ersten Schritt S210 mithilfe der Windfahne 10 eine Abweichung zwischen einer Windrichtung und der Horizontalkomponente der (in die Gondel 120 hinein orientierten) Rotorachse.

Überschreitet diese Abweichung einen vorgegebenen Mindestwert (S220: "Y"), ermittelt die Steuerung 100, dass ein Windnachführbedarf vorliegt, und schaltet in einen Nachführbetriebsmodus, andernfalls (S220: "N") kehrt das Verfahren bzw. die Steuerung zu Schritt S210 zurück.

Im Nachführbetriebsmodus ermittelt sie in einem Schritt S230 eine Rotordrehfrequenz des Rotors 130 um seine Rotorachse R, eine Rotor(dreh)position, eine Amplitude einer Blattwinkelverstellung zur Unterstützung einer Windnachführbewegung durch den Nachführantrieb und auf Basis der Rotordrehfrequenz eine Phasenverschiebung der Amplitude gegenüber einer rotorfesten Referenzwinkellage, welche sie auf Basis der Rotor(dreh)position ermittelt. Die Amplitude kann beispielsweise ein abgespeicherter, konstanter oder aus einem Kennfeld ausgelesener Referenzwert sein.

In einem Schritt S240 verstellt die Steuerung 100 die Blattwinkel zyklisch mit der ermittelten Amplitude und der Phasenverschiebung.

Ist seit der Aktivierung dieser Blattwinkelverstellung eine vorgegebene Wartezeit verstrichen (S250: "Y"), steuert sie in einem Schritt S260 den Nachführantrieb 20 so, dass er die Gondel 120 und damit den Rotor 130 um die Gierachse G derart verdreht, dass die Abweichung reduziert wird.

Obwohl in der vorhergehenden Beschreibung exemplarische Ausführungen erläutert wurden, sei darauf hingewiesen, dass eine Vielzahl von Abwandlungen möglich ist.

So wurde das Verfahren bzw. System der Ausführung der Fig. 2 anhand einer einstufigen Reduzierung bei Überschreiten der (ersten) untere Reduzier-Geschwindigkeitsgrenze erläutert. In nicht dargestellten Abwandlungen können analog auch eine oder mehrere weitere Reduzier- und/oder eine oder mehrere Erhöhungsstufen bei Unterschreiten einer bzw. mehrerer oberer Erhöhungs-Geschwindigkeitsgrenzen vorgesehen sein.

Das Verfahren bzw. System der Ausführung der Fig. 3 weist eine Ermittlung der Amplitude der Blattwinkelverstellung sowohl in Abhängigkeit von einem Rotordrehmoment (vgl. Schritte S150, S155) als auch einer Windnachführungsrichtung des Rotors um die Gierachse (vgl. Schritte S140, S145) sowie einen Vorhaltewinkel in Abhängigkeit von der Amplitude (vgl. Schritte S160) auf, wobei ein oder zwei dieser Merkmale in nicht dargestellten Abwandlungen entfallen können.

Das Verfahren bzw. System der Ausführung der Fig. 4 weist eine Wartezeit (vgl. Schritt S250) als auch eine dynamisch verstellte kommandierte Phasenverschiebung (vgl. Schritte S230, S240) auf, wobei eines dieser Merkmale in nicht dargestellten Abwandlungen entfallen kann.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

Insbesondere wurden einzelne Aspekte der vorliegenden Erfindung, insbesondere die Reduzierung bzw. analoge Erhöhung der Amplitude in einem Reduzier- bzw.

Erhöhungs-Geschwindigkeitsbereich (vgl. insbesondere Fig. 2 und zugehörige Beschreibung), die Verstellung der Amplitude in Abhängigkeit von einem Rotordrehmoment bzw. einer Windnachführungsrichtung bzw. die Verstellung der Blattwinkel um den Vorhaltewinkel (vgl. insbesondere Fig. 3 und zugehörige Beschreibung), und die Aktivierung des Nachführantriebs um eine vorgegebene Wartezeit nach der Blattwinkelverstellung (verzögert) bzw. die in Abhängigkeit von einer Rotordrehfrequenz dynamisch verstellte kommandierte Phasenverschiebung (vgl. insbesondere Fig. 4 und zugehörige Beschreibung), vorstehend anhand verschiedener Ausführungen erläutert, wobei zwei oder mehr diese Aspekte bzw. vorstehend beschriebenen Merkmale bzw. Ausführungen auch vorteilhaft kombiniert sein können.

So kann beispielsweise die vorstehend erläuterte Reduzierung und/oder Erhöhung der Amplitude in einem Reduzier- bzw. Erhöhungs-Geschwindigkeitsbereich zusätzlich zu der Verstellung der Amplitude in Abhängigkeit von einem Rotordrehmoment und/oder einer Windnachführungsrichtung und/oder der Verstellung die Blattwinkel um den Vorhaltewinkel realisiert sein. Zusätzlich oder alternativ kann beispielsweise die vorstehend erläuterte Reduzierung und/oder Erhöhung der Amplitude in einem Reduzier- bzw.

Erhöhungs-Geschwindigkeitsbereich zusätzlich zu der Aktivierung des Nachführantriebs um eine vorgegebene Wartezeit nach der Blattwinkelverstellung und/oder der in Abhängigkeit von einer Rotordrehfrequenz dynamisch verstellten kommandierten Phasenverschiebung realisiert sein. Zusätzlich oder alternativ kann beispielsweise die vorstehend erläuterte Verstellung der Amplitude in Abhängigkeit von einem Rotordrehmoment und/oder einer Windnachführungsrichtung und/oder die Verstellung die Blattwinkel um den Vorhaltewinkel zusätzlich zu der Aktivierung des Nachführantriebs um eine vorgegebene Wartezeit nach der Blattwinkelverstellung und/oder der in Abhängigkeit von einer Rotordrehfrequenz dynamisch verstellten kommandierten Phasenverschiebung realisiert sein.

### Bezugszeichenliste

- 10: Windfahne
- 20: Nachführantrieb
- 30: Rotorblatt
- 100: Steuerung
- 110: Turm
- 120: Gondel
- 130: Rotor
- 140: Generator(-Getriebe-Einheit)
- 150: Stromnetz

- B: Blattachse
- G: Gierachse
- R: Rotorachse

## Patentansprüche

1. Verfahren zum Betreiben einer Windenergieanlage, die einen um eine Rotorachse (R) drehbaren Rotor (130) mit wenigstens zwei individuell um ihre Blattachse (B) verstellbaren Rotorblättern (30) und
einen Nachführantrieb (20) zum Windnachführen des Rotors um eine Gierachse (G) aufweist,
wobei in einem Nachführbetriebsmodus Blattwinkel der Rotorblätter um ihre Blattachse zur Unterstützung einer Windnachführbewegung durch den Nachführantrieb verstellt werden (S240), **dadurch gekennzeichnet, dass** eine kommandierte Phasenverschiebung einer Amplitude der Blattwinkelverstellung gegenüber einer rotorfesten Referenzwinkellage um die Rotorachse in Abhängigkeit von einer Rotordrehfrequenz des Rotors um die Rotorachse dynamisch verstellt wird (S230).

2. Verfahren nach Anspruch 1, **dadurch gekennzeichnet, dass** der Nachführantrieb zum Windnachführen des Rotors um die Gierachse um eine vorgegebene Wartezeit nach der Blattwinkelverstellung der Rotorblätter um ihre Blattachse zur Unterstützung dieser Windnachführbewegung aktiviert wird (S260); und die Wartezeit in Abhängigkeit von einer Rotordrehfrequenz, einer Windgeschwindigkeit und/oder einem Rotordrehmoment um die Rotorachse vorgegeben wird.

3. Verfahren nach einem der vorhergehenden Ansprüche, **dadurch gekennzeichnet, dass** der Nachführantrieb zum Windnachführen des Rotors um die Gierachse zusammen mit der Blattwinkelverstellung der Rotorblätter um ihre Blattachse zur Unterstützung dieser Windnachführbewegung oder um eine vorgegebene Vorlaufzeit vor dieser Blattwinkelverstellung deaktiviert wird.

4. Verfahren nach einem der vorhergehenden Ansprüche, **dadurch gekennzeichnet, dass** die Wartezeit wenigstens 0,25 Sekunden und/oder höchstens 30 Sekunden beträgt.

5. Verfahren nach einem der vorhergehenden Ansprüche, **dadurch gekennzeichnet, dass** die kommandierte Phasenverschiebung zusätzlich einen von der Rotordrehfrequenz unabhängigen statischen Anteil aufweist.

6. Verfahren nach einem der vorhergehenden Ansprüche, **dadurch gekennzeichnet, dass** die kommandierte Phasenverschiebung für einen ersten Wert der Rotordrehfrequenz einen ersten Phasenverschiebungswert und für einen größeren zweiten Wert der Rotordrehfrequenz einen größeren zweiten Phasenverschiebungswert aufweist.

7. Verfahren nach einem der vorhergehenden Ansprüche, mit den Schritten:
- Ermitteln (S210) eines Windnachführbedarfs;
- Ermitteln (S230) der Amplitude der Blattwinkelverstellung zur Unterstützung der Windnachführbewegung durch den Nachführantrieb; und
- Einstellen (S240) der individuellen Blattwinkel der Rotorblätter auf Basis dieser Amplitude,
wobei das Verfahren die Schritte:
- Ermitteln (S230) einer Rotordrehfrequenz;
- Ermitteln (S230) einer Phasenverschiebung der Amplitude in Abhängigkeit von der Rotordrehfrequenz; und
- Einstellen (S240) der individuellen Blattwinkel der Rotorblätter auf Basis dieser Phasenverschiebung;
und/oder den Schritt:
- Aktivieren (S260) des Nachführantriebs zum Windnachführen des Rotors um die Gierachse um eine vorgegebene Wartezeit nach Aktivieren der Blattwinkelverstellung der Rotorblätter um ihre Blattachse zur Unterstützung dieser Windnachführbewegung aufweist.

8. System zum Betreiben einer Windenergieanlage, die einen um eine Rotorachse (R) drehbaren Rotor (130) mit wenigstens zwei individuell um ihre Blattachse (B) verstellbaren Rotorblättern (30) und einen Nachführantrieb (20) zum Windnachführen des Rotors um eine Gierachse (G) aufweist,
wobei das System zur Durchführung eines Verfahrens nach einem der vorhergehenden Ansprüche eingerichtet ist und/oder aufweist:
- Mittel zum Verstellen von Blattwinkeln der Rotorblätter um ihre Blattachse zur Unterstützung einer Windnachführbewegung durch den Nachführantrieb in einem Nachführbetriebsmodus sowie
- Mittel zum dynamischen Verstellen einer kommandierten Phasenverschiebung einer Amplitude dieser Blattwinkelverstellung gegenüber einer rotorfesten Referenzwinkellage um die Rotorachse in Abhängigkeit von einer Rotordrehfrequenz des Rotors um die Rotorachse.

9. Verfahren zum Betreiben einer Windenergieanlage nach einem der vorhergehenden Ansprüche 1 bis 7,
wobei eine Amplitude dieser Blattwinkelverstellung
in Abhängigkeit von
- einem Rotordrehmoment um die Rotorachse und/oder
- einer Windnachführungsrichtung des Rotors um die Gierachse verstellt wird (S145, S155); und/oder wobei
- die Blattwinkel in Abhängigkeit von einer Amplitude dieser Blattwinkelverstellung zusätzlich um einen Vorhaltewinkel zur Einhaltung eines minimalen Blattwinkels verstellt werden (S160).

10. Verfahren nach Anspruch 9, **dadurch gekennzeichnet, dass** die Amplitude der Blattwinkelverstellung zur Unterstützung einer Windnachführbewegung durch den Nachführantrieb gleich Null ist, falls das Rotordrehmoment einen vorgegebenen Drehmomentgrenzwert unterschreitet.

11. Verfahren nach einem der vorhergehenden Ansprüche 9 oder 10, **dadurch gekennzeichnet, dass** das Rotordrehmoment auf Basis eines Drehmoment-Sollwertes ermittelt wird.

12. Verfahren nach einem der vorhergehenden Ansprüche 9 bis 11, **dadurch gekennzeichnet, dass** die Amplitude der Blattwinkelverstellung zur Unterstützung einer Windnachführbewegung durch den Nachführantrieb bei einer ersten Windnachführungsrichtung und die Amplitude der Blattwinkelverstellung zur Unterstützung einer Windnachführbewegung durch den Nachführantrieb bei einer hierzu gegensinnigen zweiten Windnachführungsrichtung einen, insbesondere vorgegebenen und/oder konstanten oder von einem Rotordrehmoment abhängigen, Offset aufweisen.

13. Verfahren nach einem der vorhergehenden Ansprüche 9 bis 12, **dadurch gekennzeichnet, dass** die Blattwinkel kollektiv um den Vorhaltewinkel verstellt werden.

14. Verfahren nach einem der vorhergehenden Ansprüche 9 bis 13, **gekennzeichnet durch** die Schritte:
- Ermitteln (S110) eines Windnachführbedarfs;
- Ermitteln (S130, S145, S155) der Amplitude der Blattwinkelverstellung zur Unterstützung der Windnachführbewegung durch den Nachführantrieb; und
- Einstellen (S160) der individuellen Blattwinkel der Rotorblätter auf Basis dieser Amplitude,
wobei diese Amplitude in Abhängigkeit von einem Rotordrehmoment um die Rotorachse und/oder einer Windnachführungsrichtung des Rotors um die Gierachse ermittelt wird (S140 - S155) und/oder die Blattwinkel in Abhängigkeit von einem ermittelten Vorhaltewinkel zur Einhaltung eines minimalen Blattwinkels eingestellt werden (S160).

15. System nach Anspruch 8,
wobei das System zur Durchführung eines Verfahrens nach einem der vorhergehenden Ansprüche 9 bis 14 eingerichtet ist und/oder aufweist:
- Mittel zum Verstellen von Blattwinkeln der Rotorblätter um ihre Blattachse zur Unterstützung einer Windnachführbewegung durch den Nachführantrieb in einem Nachführbetriebsmodus sowie
- Mittel zum Verstellen einer Amplitude dieser Blattwinkelverstellung in Abhängigkeit von einem Rotordrehmoment um die Rotorachse und/oder einer Windnachführungsrichtung des Rotors um die Gierachse; und/oder
- Mittel zum Verstellen der Blattwinkel zur Einhaltung eines minimalen Blattwinkels zusätzlich um einen Vorhaltewinkel in Abhängigkeit von einer Amplitude dieser Blattwinkelverstellung.

16. Verfahren zum Betreiben einer Windenergieanlage nach einem der vorhergehenden Ansprüche 1 bis 7,
wobei eine Amplitude der Blattwinkelverstellung
- um oder auf einen vorgegebenen Wert reduziert wird (S55), falls eine Giergeschwindigkeit des Rotors um die Gierachse in einem vorgegebenen Reduzier-Geschwindigkeitsbereich liegt, der eine untere Reduzier-Geschwindigkeitsgrenze aufweist; und/oder
- um oder auf einen vorgegebenen Wert erhöht wird, falls eine Giergeschwindigkeit des Rotors um die Gierachse in einem vorgegebenen Erhöhungs-Geschwindigkeitsbereich liegt, der eine obere Erhöhungs-Geschwindigkeitsgrenze aufweist.

17. Verfahren nach Anspruch 16, **dadurch gekennzeichnet, dass** im Nachführbetriebsmodus
- wenigstens ein, insbesondere wenigstens zwei, und/oder höchstens vier Reduzier-Geschwindigkeitsbereiche, insbesondere genau ein oder zwei Reduzier-Geschwindigkeitsbereiche, vorgesehen sind, für die die Amplitude der Blattwinkelverstellung jeweils geschwindigkeitsbereichspezifisch reduziert wird;
und/oder
- wenigstens ein, insbesondere wenigstens zwei, und/oder höchstens vier Erhöhungs-Geschwindigkeitsbereiche, insbesondere genau ein oder zwei Erhöhungs-Geschwindigkeitsbereiche, vorgesehen sind, für die die Amplitude der Blattwinkelverstellung jeweils geschwindigkeitsbereichspezifisch erhöht wird.

18. Verfahren nach einem der vorhergehenden Ansprüche 16 oder 17, **dadurch gekennzeichnet, dass** in dem Nachführbetriebsmodus die Amplitude der Blattwinkelverstellung zur Unterstützung einer Windnachführbewegung durch den Nachführantrieb
- um oder auf einen vorgegebenen Wert reduziert wird, falls die Giergeschwindigkeit in einem vorgegebenen zweiten Reduzier-Geschwindigkeitsbereich liegt, der eine zweite untere Reduzier-Geschwindigkeitsgrenze aufweist; und/oder
- um oder auf einen vorgegebenen Wert erhöht wird, falls die Giergeschwindigkeit in einem vorgegebenen zweiten Erhöhungs-Geschwindigkeitsbereich liegt, der eine zweite obere Erhöhungs-Geschwindigkeitsgrenze aufweist.

19. Verfahren nach einem der vorhergehenden Ansprüche 16 bis 18, **dadurch gekennzeichnet, dass** ein Geschwindigkeitsbereich sich über wenigstens 0,05° pro Sekunde erstreckt.

20. Verfahren nach einem der vorhergehenden Ansprüche 16 bis 19, **gekennzeichnet durch** die Schritte:
- Ermitteln (S10) eines Windnachführbedarfs;
- Ermitteln (S30) der Amplitude der Blattwinkelverstellung zur Unterstützung der Windnachführbewegung durch den Nachführantrieb;
- Einstellen (S40) der individuellen Blattwinkel der Rotorblätter auf Basis dieser Amplitude
- Ermitteln (S40) eines Ist-Wertes der Giergeschwindigkeit des Rotors um die Gierachse;
- stufenförmiges Reduzieren (S55) der ermittelten Amplitude, falls der Ist-Wert einen oder mehrere vorgegebene Geschwindigkeitsgrenzen überschreitet; und/oder stufenförmiges Erhöhen der ermittelten Amplitude, falls der Ist-Wert einen oder mehrere vorgegebene Geschwindigkeitsgrenzen unterschreitet; sowie
- Einstellen (S60) der individuellen Blattwinkel der Rotorblätter auf Basis dieser Amplitude.

21. System nach Anspruch 8,
wobei das System zur Durchführung eines Verfahrens nach einem der vorhergehenden Ansprüche 16 bis 20 eingerichtet ist und/oder aufweist:
- Mittel zum Verstellen von Blattwinkeln der Rotorblätter um ihre Blattachse zur Unterstützung einer Windnachführbewegung durch den Nachführantrieb in einem Nachführbetriebsmodus sowie
- Mittel zum Reduzieren einer Amplitude dieser Blattwinkelverstellung um oder auf einen vorgegebenen Wert, falls eine Giergeschwindigkeit des Rotors um die Gierachse in einem vorgegebenen Reduzier-Geschwindigkeitsbereich liegt, der eine untere Reduzier-Geschwindigkeitsgrenze aufweist; und/oder
- Mittel zum Erhöhen einer Amplitude dieser Blattwinkelverstellung um oder auf einen vorgegebenen Wert, falls eine Giergeschwindigkeit des Rotors um die Gierachse in einem vorgegebenen Erhöhungs-Geschwindigkeitsbereich liegt, der eine obere Erhöhungs-Geschwindigkeitsgrenze aufweist.

22. Computerprogrammprodukt mit einem Programmcode, der auf einem von einem Computer lesbaren Medium gespeichert ist, wobei ein Ausführen dieses Programmcodes ein System bzw. eine Steuerung, insbesondere einen Computer, dazu veranlasst, das Verfahren nach einem der Ansprüche 1-7, 9-14, oder 16-20 auszuführen.

## Claims

1. A method of operating a wind energy installation which comprises
a rotor (130) that can rotate about a rotor axis (R), wherein the rotor (130) has at least two rotor blades (30) that can be individually adjusted about their blade axis (B), and a tracking drive (20) for tracking of the rotor about a yaw axis (G) according to the wind, wherein, in a tracking mode of operation, blade angles of the rotor blades are adjusted (S240) about their blade axes by the tracking drive in order to support a movement of tracking according to the wind, **characterised in that** a commanded phase shift of an amplitude of the adjustment of the blade angle with respect to a rotor-fixed reference angle position about the rotor axis is dynamically adjusted (S230) as a function of a rotor rotation frequency of the rotor about the rotor axis.

2. The method according to claim 1, **characterised in that** the tracking drive for tracking of the rotor about the yaw axis according to the wind is activated (S260) after a specified waiting time following the adjustment of the blade angle of the rotor blades about their blade axis in order to support this movement of tracking according to the wind; and the waiting time is specified as a function of a rotor rotation frequency, a wind speed and / or a torque of the rotor about the rotor axis.

3. The method according to any one of the preceding claims, **characterised in that** the tracking drive for tracking of the rotor about the yaw axis according to the wind is deactivated together with the adjustment of the blade angle of the rotor blades about their blade axis or by a predetermined lead time before this adjustment of the blade angle, in order to support this movement of tracking according to the wind.

4. The method according to any one of the preceding claims, **characterised in that** the waiting time is at least 0.25 seconds and / or at most 30 seconds.

5. The method according to any one of the preceding claims, **characterised in that** the commanded phase shift additionally has a static component that is independent of the rotor rotation frequency.

6. The method according to any one of the preceding claims, **characterised in that** the commanded phase shift has a first phase shift value for a first value of the rotor rotation frequency and a larger, second phase shift value for a larger, second value of the rotor rotation frequency.

7. The method according to any one of the preceding claims, comprising the steps of:
- determining (S210) a requirement to carry out tracking according to the wind;
- determining (S230) the amplitude of the blade angle adjustment for supporting the tracking movement according to the wind by the tracking drive; and
- adjusting (S240) the individual blade angles of the rotor blades on the basis of this amplitude,
wherein the method comprises the steps of:
- determining (S230) a rotor rotation frequency;
- determining (S230) a phase shift of the amplitude as a function of the rotor rotation frequency; and
- adjusting (S240) the individual blade angles of the rotor blades on the basis of this phase shift;
and / or the step of:
- activating (S260) the tracking drive in order to track the rotor about the yaw axis according to the wind after a predetermined waiting time following activation of the blade angle adjustment of the rotor blades about their blade axis in order to support this movement of tracking according to the wind.

8. A system for operating a wind energy installation, which wind energy installation comprises a rotor (130) that can rotate about a rotor axis (R), wherein the rotor (130) has at least two rotor blades (30) that can be individually adjusted about their blade axis (B), and a tracking drive (20) for tracking of the rotor about a yaw axis (G) according to the wind,
wherein the system is set up for carrying out the method according to any one of the preceding claims, and / or comprises:
- means for adjusting blade angles of the rotor blades about their blade axis in order to support a movement of tracking according to the wind by the tracking drive in a tracking mode of operation, as well as
- means for dynamically adjusting a commanded phase shift of an amplitude of this adjustment of the blade angle with respect to a rotor-fixed reference angle position about the rotor axis as a function of a rotor rotation frequency of the rotor about the rotor axis.

9. The method of operating a wind energy installation according to any one of the preceding claims 1 to 7,
wherein an amplitude of this adjustment of the blade angle is adjusted (S145, S155) as a function of
- a rotor torque about the rotor axis and / or
- a wind tracking direction of the rotor about the yaw axis;
and / or wherein
- the blade angles are additionally adjusted (S160) by a lead angle in order to maintain a minimum blade angle as a function of an amplitude of this blade angle adjustment.

10. The method according to claim 9, **characterised in that** the amplitude of the blade angle adjustment in order to support a movement of tracking according to the wind by the tracking drive is zero in case the rotor torque falls below a predetermined torque limit value.

11. The method according to any one of the preceding claims 9 or 10, **characterised in that** the rotor torque is determined on the basis of a target value of the torque.

12. The method according to any one of the preceding claims 9 to 11, **characterised in that** the amplitude of the blade angle adjustment in order to support a movement of tracking according to the wind by the tracking drive in a first wind tracking direction and the amplitude of the blade angle adjustment in order to support a movement of tracking according to the wind by the tracking drive in a second wind tracking direction opposite to the first wind tracking direction has an offset, in particular a predetermined and / or constant offset or an offset which is dependent on a rotor torque.

13. The method according to any one of the preceding claims 9 to 12, **characterised in that** the blade angles are collectively adjusted by the lead angle.

14. The method according to any one of the preceding claims 9 to 13, **characterised by** the steps of:
- determining (S110) a requirement to carry out tracking according to the wind;
- determining (S130, S145, S155) the amplitude of the blade angle adjustment to support the movement of tracking according to the wind by the tracking drive; and
- adjusting (S160) the individual blade angles of the rotor blades on the basis of this amplitude,
wherein this amplitude is determined (S140 - S155) as a function of a rotor torque about the rotor axis and / or a wind tracking direction of the rotor about the yaw axis and / or the blade angles are adjusted (S160) as a function of a lead angle that has been determined in order to maintain a minimum blade angle.

15. The system according to claim 8,
wherein the system is set up for carrying out the method according to any one of the preceding claims 9 to 14, and / or wherein the system comprises:
- means for adjusting blade angles of the rotor blades about their blade axis in order to support a movement of tracking according to the wind by the tracking drive in a tracking mode of operation, as well as
- means for adjusting an amplitude of this blade angle adjustment as a function of a rotor torque about the rotor axis and / or a wind tracking direction of the rotor about the yaw axis; and / or
- means for adjusting the blade angles in order to maintain a minimum blade angle in addition to a lead angle as a function of an amplitude of this blade angle adjustment.

16. The method of operating a wind energy installation according to any one of the preceding claims 1 to 7,
wherein an amplitude of the blade angle adjustment
- is reduced (S55) by a predetermined value or is reduced (S55) to a predetermined value in case a yaw speed of the rotor about the yaw axis is within a predetermined reduction speed range, which has a lower reduction speed limit; and / or
- is increased by a predetermined value or is increased to a predetermined value in case a yaw speed of the rotor about the yaw axis is within a predetermined increase speed range, which has an upper increase speed limit.

17. The method according to claim 16, **characterised in that**, in the tracking mode of operation,
- at least one, in particular at least two, and / or at most four reduction speed ranges, in particular exactly one or two reduction speed ranges, are provided, for which the amplitude of the blade angle adjustment is reduced, in each case in a speed range-specific manner; and / or
- at least one, in particular at least two, and / or at most four increase speed ranges, in particular exactly one or two increase speed ranges, are provided, for which the amplitude of the blade angle adjustment is increased, in each case in a speed range-specific manner.

18. The method according to any one of the preceding claims 16 or 17, **characterised in that**, in the tracking mode of operation, in order to support a movement of tracking according to the wind by the tracking drive, the amplitude of the blade angle adjustment
- is reduced by a predetermined value or is reduced to a predetermined value in case the yaw speed is within a predetermined second reduction speed range, which has a second, lower reduction speed limit; and / or
- is increased by a predetermined value or is increased to a predetermined value in case the yaw speed is within a predetermined second increase speed range, which has a second, upper increase speed limit.

19. The method according to any one of the preceding claims 16 to 18, **characterised in that** a speed range extends over at least 0.05° per second.

20. The method according to any one of the preceding claims 16 to 19, **characterised by** the steps of:
- determining (S10) a requirement to carry out tracking according to the wind;
- determining (S30) the amplitude of the blade angle adjustment in order to support the tracking movement according to the wind by the tracking drive;
- adjusting (S40) the individual blade angles of the rotor blades on the basis of this amplitude;
- determining (S40) an actual value of the yaw speed of the rotor about the yaw axis;
- reducing (S55) the determined amplitude in a stepwise manner in case the actual value exceeds one or more specified speed limits; and / or increasing the determined amplitude in a stepwise manner in case the actual value falls below one or more specified speed limits; as well as
- adjusting (S60) the individual blade angles of the rotor blades on the basis of this amplitude.

21. The system according to claim 8,
wherein the system is set up for carrying out the method according to any one of the preceding claims 16 to 20, and / or wherein the system comprises:
- means for adjusting blade angles of the rotor blades about their blade axis in order to support a movement of tracking according to the wind by the tracking drive in a tracking mode of operation, as well as
- means for reducing an amplitude of this blade angle adjustment by a predetermined value or to a predetermined value in case a yaw speed of the rotor about the yaw axis is within a predetermined reduction speed range, which has a lower reduction speed limit; and / or
- means for increasing an amplitude of this blade angle adjustment by a predetermined value or to a predetermined value in case a yaw speed of the rotor about the yaw axis is within a predetermined increase speed range, which has an upper increase speed limit.

22. A computer program product comprising a program code which is stored on a computer-readable medium, wherein execution of this program code causes a system or a control facility, in particular a computer, to carry out the method according to any one of claims 1 to 7, 9 to 14, or 16 to 20.

## Revendications

1. Procédure de fonctionnement d'une éolienne qui présente un rotor (130) pouvant tourner autour d'un axe de rotor (R) avec au moins deux pales de rotor (30) réglables individuellement autour de leur axe de pale (B) et
un entraînement d'orientation (20) pour l'orientation au vent du rotor autour d'un axe de lacet (G),
dans lequel, dans un mode de fonctionnement d'orientation, les angles de calage des pales des pales de rotor sont réglés autour de leur axe de pale pour assister un mouvement d'orientation au vent par l'entraînement d'orientation (S240), **caractérisé en ce qu'**un décalage de phase commandé d'une amplitude du réglage de l'angle de calage des pales par rapport à une position angulaire de référence solidaire du rotor autour de l'axe de rotor est réglé dynamiquement (S230) en fonction d'une fréquence de rotation de rotor du rotor autour de l'axe de rotor.

2. Procédé selon la revendication 1, **caractérisé en ce que** l'entraînement d'orientation pour l'orientation au vent du rotor autour de l'axe de lacet est activé (S260) pendant un temps d'attente prédéfini après le réglage d'angle de calage des pales des pales de rotor autour de leur axe de pale pour assister ce mouvement d'orientation au vent ; et le temps d'attente est prédéfini en fonction d'une fréquence de rotation de rotor, d'une vitesse du vent et/ou d'un couple de rotor autour de l'axe de rotor.

3. Procédé selon l'une quelconque des revendications précédentes, **caractérisé en ce que** l'entraînement d'orientation pour orienter le rotor au vent autour de l'axe de lacet est désactivé conjointement avec le réglage d'angle de calage des pales des pales de rotor autour de leur axe de pale pour assister ce mouvement d'orientation au vent ou d'un temps d'avance prédéfini avant ce réglage d'angle de calage des pales.

4. Procédé selon l'une quelconque des revendications précédentes, **caractérisé en ce que** le temps d'attente est d'au moins 0,25 seconde et/ou de maximum 30 secondes.

5. Procédé selon l'une quelconque des revendications précédentes, **caractérisé en ce que** le décalage de phase commandé présente en outre une part statique indépendante de la fréquence de rotation de rotor.

6. Procédé selon l'une quelconque des revendications précédentes, **caractérisé en ce que** le décalage de phase commandé présente une première valeur de décalage de phase pour une première valeur de la fréquence de rotation de rotor et une deuxième valeur de décalage de phase supérieure pour une deuxième valeur de la fréquence de rotation de rotor supérieure.

7. Procédé selon l'une quelconque des revendications précédentes, avec les étapes :
- de détermination (S210) d'un besoin d'orientation au vent ;
- de détermination (S230) de l'amplitude du réglage d'angle de calage des pales pour assister le mouvement d'orientation au vent par l'entraînement d'orientation ; et
- d'ajustement (S240) des angles de calage des pales individuels des pales de rotor sur la base de cette amplitude,
dans lequel le procédé comprend les étapes :
- de détermination (S230) d'une fréquence de rotation de rotor ;
- de détermination (S230) d'un décalage de phase de l'amplitude en fonction de la fréquence de rotation de rotor ; et
- d'ajustement (S240) des angles de calage des pales individuels des pales de rotor sur la base de ce décalage de phase ;
et/ou l'étape :
- d'activation (S260) de l'entraînement d'orientation pour orienter le rotor au vent autour de l'axe de lacet pendant un temps d'attente prédéfini après l'activation du réglage d'angle de calage des pales des pales de rotor autour de leur axe de pale pour assister ce mouvement d'orientation au vent.

8. Système de fonctionnement d'une éolienne, qui présente un rotor (130) pouvant tourner autour d'un axe de rotor (R) avec au moins deux pales de rotor (30) réglables individuellement autour de leur axe de pale (B) et un entraînement d'orientation (20) pour orienter le rotor au vent autour d'un axe de lacet (G), dans lequel le système est conçu pour mettre en œuvre un procédé selon l'une quelconque des revendications précédentes et/ou présente :
- des moyens de réglage d'angles de calage des pales de rotor autour de leur axe de pale afin d'assister un mouvement d'orientation au vent par l'entraînement d'orientation dans un mode de fonctionnement d'orientation ainsi que
- des moyens de réglage dynamique d'un décalage de phase commandé d'une amplitude de ce réglage d'angle de calage des pales par rapport à une position angulaire de référence solidaire du rotor autour de l'axe de rotor en fonction d'une fréquence de rotation de rotor du rotor autour de l'axe de rotor.

9. Procédé de fonctionnement d'une éolienne selon l'une quelconque des revendications précédentes 1 à 7,
dans lequel une amplitude de ce réglage d'angle de calage des pales est réglée
en fonction
- d'un couple de rotor autour de l'axe de rotor et/ou
- d'une direction d'orientation au vent du rotor autour de l'axe de lacet (S145, S155) ; et/ou dans lequel
- les angles de calage des pales sont réglés en plus d'un angle de correction de dérive pour maintenir un angle de pale minimal (S160) en fonction d'une amplitude de ce réglage d'angle de calage des pales.

10. Procédé selon la revendication 9, **caractérisé en ce que** l'amplitude du réglage d'angle de calage des pales pour assister un mouvement d'orientation au vent par l'entraînement d'orientation est égale à zéro si le couple de rotor est inférieur à une valeur limite de couple prédéfinie.

11. Procédé selon l'une quelconque des revendications précédentes 9 ou 10, **caractérisé en ce que** le couple de rotor est déterminé sur la base d'une valeur de consigne de couple.

12. Procédé selon l'une quelconque des revendications précédentes 9 à 11, **caractérisé en ce que** l'amplitude du réglage d'angle de calage des pales pour assister un mouvement d'orientation au vent par l'entraînement d'orientation dans une première direction d'orientation au vent et l'amplitude du réglage d'angle de calage des pales pour assister un mouvement d'orientation au vent par l'entraînement d'orientation dans une deuxième direction d'orientation au vent opposée à celle-ci présentent en particulier un décalage prédéfini et/ou constant ou dépendant d'un couple de rotor.

13. Procédé selon l'une quelconque des revendications précédentes 9 à 12, **caractérisé en ce que** les angles de pale sont réglés collectivement autour de l'angle de correction de dérive.

14. Procédé selon l'une quelconque des revendications précédentes 9 à 13, **caractérisé par** les étapes :
- de détermination (S110) d'un besoin d'orientation au vent ;
- de détermination (S130, S145, S155) de l'amplitude de l'angle de calage des pales pour assister le mouvement d'orientation au vent par l'entraînement d'orientation ; et
- d'ajustement (S160) des angles de calage des pales individuels des pales de rotor sur la base de cette amplitude,
dans lequel cette amplitude est déterminée en fonction d'un couple de rotor autour de l'axe de rotor et/ou d'une direction d'orientation au vent du rotor autour de l'axe de lacet (S140 - S155) et/ou les angles de calage des pales sont réglés en fonction d'un angle de correction de dérive déterminé pour respecter un angle de calage des pales minimal (S160).

15. Système selon la revendication 8,
dans lequel le système est conçu pour mettre en œuvre un procédé selon l'une quelconque des revendications 9 à 14 précédentes et/ou présente :
- des moyens de réglage d'angles de calage des pales de rotor autour de leur axe de pale afin d'assister un mouvement d'orientation au vent par l'entraînement d'orientation dans un mode de fonctionnement d'orientation ainsi que
- des moyens de réglage d'une amplitude de ce réglage d'angle de calage des pales en fonction d'un couple de rotor autour de l'axe de rotor et/ou d'une direction d'orientation au vent du rotor autour de l'axe de lacet ;
et/ou
- des moyens de réglage des angles de calage des pales pour maintenir un angle de pale minimal en plus d'un angle de correction de dérive en fonction d'une amplitude de ce réglage d'angle de calage des pales.

16. Procédé de fonctionnement d'une éolienne selon l'une quelconque des revendications précédentes 1 à 7,
dans lequel l'amplitude du réglage d'angle de calage des pales
- est réduite de ou à une valeur prédéfinie (S55) si une vitesse de lacet du rotor autour de l'axe de lacet se situe dans une plage de vitesse de réduction prédéfinie qui présente une limite inférieure de vitesse de réduction ;
et/ou
- est augmentée de ou à une valeur prédéfinie si une vitesse de lacet du rotor autour de l'axe de lacet se situe dans une plage de vitesse d'augmentation prédéfinie qui présente une limite supérieure de vitesse d'augmentation.

17. Procédé selon la revendication 16, **caractérisé en ce que** dans le mode d'orientation
- au moins une, en particulier au moins deux, et/ou au maximum quatre plages de vitesse de réduction, en particulier exactement une ou deux plages de vitesse de réduction, sont prévues, pour lesquelles l'amplitude du réglage de l'angle de calage des pales est respectivement réduite spécifiquement à la plage de vitesse ; et/ou
- au moins une, en particulier au moins deux, et/ou au maximum quatre plages de vitesse d'augmentation, en particulier exactement une ou deux plages de vitesse d'augmentation, sont prévues, pour lesquelles l'amplitude du réglage de l'angle de calage des pales est respectivement augmentée spécifiquement à la plage de vitesse.

18. Procédé selon l'une quelconque des revendications précédentes 16 ou 17, **caractérisé en ce que**, dans le mode de fonctionnement d'orientation, l'amplitude du réglage de l'angle de calage des pales pour assister un mouvement d'orientation au vent par l'entraînement d'orientation
- est réduite de ou à une valeur prédéfinie si la vitesse de lacet se situe dans une deuxième plage de vitesse de réduction prédéfinie qui présente une deuxième limite inférieure de vitesse de réduction ; et/ou
- est augmentée de ou à une valeur prédéfinie si la vitesse de lacet se situe dans une deuxième plage de vitesse d'augmentation prédéfinie qui présente une deuxième limite supérieure de vitesse d'augmentation.

19. Procédé selon l'une quelconque des revendications précédentes 16 à 18, **caractérisé en ce qu'**une plage de vitesse s'étend sur au moins 0,05° par seconde.

20. Procédé selon l'une quelconque des revendications précédentes 16 à 19, **caractérisé par** les étapes :
- de détermination (S10) d'un besoin d'orientation au vent ;
- de détermination (S30) de l'amplitude de l'angle de calage des pales pour assister le mouvement d'orientation au vent par l'entraînement d'orientation ;
- d'ajustement (S40) des angles de calage des pales individuels des pales de rotor sur la base de cette amplitude ;
- de détermination (S40) d'une valeur réelle de la vitesse de lacet du rotor autour de l'axe de lacet ;
- de réduction progressive (S55) de l'amplitude déterminée si la valeur réelle dépasse une ou plusieurs limites de vitesse prédéfinies ; et/ou d'augmentation progressive de l'amplitude déterminée si la valeur réelle passe en dessous d'une ou plusieurs limites de vitesse prédéfinies ; et
- d'ajustement (S60) des angles de calage des pales individuels des pales de rotor sur la base de cette amplitude.

21. Système selon la revendication 8,
dans lequel le système est conçu pour mettre en œuvre un procédé selon l'une quelconque des revendications précédentes 16 à 20 et/ou présente :
- des moyens de réglage d'angles de calage des pales de rotor autour de leur axe de pale afin d'assister un mouvement d'orientation au vent par l'entraînement d'orientation dans un mode de fonctionnement d'orientation ainsi que
- des moyens de réduction d'une amplitude de ce réglage d'angle de calage des pales de ou à une valeur prédéfinie si une vitesse de lacet du rotor autour de l'axe de lacet se situe dans une plage de vitesse de réduction prédéfinie qui présente une limite inférieure de vitesse de réduction ;
et/ou
- des moyens d'augmentation d'une amplitude de ce réglage d'angle de calage des pales de ou à une valeur prédéfinie si une vitesse de lacet du rotor autour de l'axe de lacet se situe dans une plage de vitesse d'augmentation prédéfinie qui présente une limite supérieure de vitesse d'augmentation.

22. Produit-programme d'ordinateur avec un code de programme qui est stocké sur un support lisible par un ordinateur, dans lequel une exécution de ce code de programme amène un système ou une commande, en particulier un ordinateur, à exécuter un procédé selon l'une quelconque des revendications précédentes 1 à 7, 9 à 14 ou 16 à 20.
